(19) Europäisches Patentamt / European Patent Office / Office européen des brevets

(11) **EP 4 373 044 A1**

(12) **EUROPEAN PATENT APPLICATION**
published in accordance with Art. 153(4) EPC

(43) Date of publication:
**22.05.2024 Bulletin 2024/21**

(21) Application number: **22852263.7**

(22) Date of filing: **03.08.2022**

(51) International Patent Classification (IPC):
**H04L 27/26** (2006.01) **H04L 5/00** (2006.01)

(52) Cooperative Patent Classification (CPC):
**H04L 5/00; H04L 27/26**

(86) International application number:
**PCT/CN2022/110063**

(87) International publication number:
**WO 2023/011551 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2021 CN 202110897620**

(71) Applicant: **Huawei Technologies Co., Ltd.**
**Shenzhen, Guangdong 518129 (CN)**

(72) Inventors:
• **XU, Minghui**
  **Shenzhen, Guangdong 518129 (CN)**
• **LIU, Fengwei**
  **Shenzhen, Guangdong 518129 (CN)**
• **ZHANG, Jiayin**
  **Shenzhen, Guangdong 518129 (CN)**

(74) Representative: **Maiwald GmbH**
**Engineering**
**Elisenhof**
**Elisenstrasse 3**
**80335 München (DE)**

(54) **METHOD AND APPARATUS FOR TRANSMITTING PHASE TRACKING REFERENCE SIGNAL**

(57)     A phase tracking reference signal transmission method and apparatus are provided, to improve demodulation performance. The method includes: determining a first PTRS pattern; and transmitting a PTRS based on the first PTRS pattern, where the first PTRS pattern belongs to a first PTRS pattern set, the first PTRS pattern set includes a plurality of PTRS patterns, and none of all PTRS groups in each PTRS pattern in an OFDM symbol is located at a tail of the OFDM symbol; and the PTRS pattern includes a plurality of PTRS groups, and each PTRS group includes a plurality of consecutive PTRS sampling points. None of all PTRS groups in a PTRS pattern determined by a terminal device and a network device is located at the tail of the OFDM symbol, to reduce impact of a parameter, for example, a receive window advance, on precision of phase noise estimated based on the PTRS, so that when the PTRS is transmitted based on the PTRS pattern, the demodulation performance can be improved, and spectral efficiency can be improved.

FIG. 9

**Description**

**CROSS-REFERENCE TO RELATED APPLICATIONS**

This application claims priority to Chinese Patent Application No. 202110897620.X, filed with the China National Intellectual Property Administration on August 5, 2021 and entitled "PHASE TRACKING REFERENCE SIGNAL TRANSMISSION METHOD AND APPARATUS", which is incorporated herein by reference in its entirety.

**TECHNICAL FIELD**

This application relates to the field of communication technologies, and in particular, to a phase tracking reference signal transmission method and apparatus.

**BACKGROUND**

In an operating frequency band of a communication system, a high throughput can be implemented at a high frequency that is at least 6 GHz, for example, 28 GHz, 39 GHz, 60 GHz, or 73 GHz. However, the foregoing frequency band may cause intermediate radio frequency distortion problems such as phase noise (phase noise, PHN) and a carrier frequency offset (carrier frequency offset, CFO), and may also cause a larger Doppler frequency shift of the high frequency. All the three problems may introduce a phase error, and consequently performance of the communication system deteriorates.

Currently, a phase tracking reference signal (phase tracking reference signal, PTRS) is introduced in new radio (new radio, NR) for a cyclic prefix-orthogonal frequency division multiplexing (cyclic prefix-orthogonal frequency division multiplexing, CP-OFDM) waveform and a discrete Fourier transform-spread-orthogonal frequency division multiplexing (discrete Fourier transform-spread-OFDM, DFT-s-OFDM) waveform, to compensate for impact of the phase noise and improve demodulation performance under a phase noise condition.

Specifically, when the PTRS is mapped to the DFT-s-OFDM waveform for transmission, the transmission is performed based on a determined PTRS pattern. The PTRS pattern includes a quantity of PTRS groups and a quantity of sampling points in the PTRS group. However, when the quantity of sampling points in the PTRS group in the PTRS pattern is 4, phase noise estimation performance of the PTRS is affected by a receive window advance, and consequently the demodulation performance is poor.

**SUMMARY**

This application provides a phase tracking reference signal transmission method and apparatus, to improve demodulation performance.

According to a first aspect, this application provides a phase tracking reference signal transmission method. The method may be applied to a network device, a chip in the network device, a functional module, or the like. Alternatively, the method may be applied to a terminal device, a chip in the terminal device, a functional module, or the like. The following uses an example in which the method is applied to the network device or the terminal device for description. Specifically, the method may include: determining a first PTRS pattern; and transmitting a PTRS based on the first PTRS pattern, where the first PTRS pattern belongs to a first PTRS pattern set, the first PTRS pattern set includes a plurality of PTRS patterns, and none of all PTRS groups in each PTRS pattern in an orthogonal frequency division multiplexing (orthogonal frequency division multiplexing, OFDM) symbol is located at a tail of the OFDM symbol; the PTRS pattern indicates a distribution rule of the PTRS in the OFDM symbol; and the PTRS pattern includes a plurality of PTRS groups, and each PTRS group includes a plurality of consecutive PTRS sampling points.

According to the foregoing method, the terminal device and the network device can determine a required PTRS pattern from the PTRS pattern set in which none of all PTRS groups in each PTRS pattern is located at the tail of the OFDM symbol, so that none of all PTRS groups in the determined PTRS pattern is located at the tail of the OFDM symbol, to reduce impact of a parameter, for example, a receive window advance, on precision of phase noise estimated based on the PTRS. In this way, when the PTRS is transmitted based on the PTRS pattern, demodulation performance can be improved, and spectral efficiency can be improved.

In a possible design, when the method is applied to the network device, the transmitting a PTRS based on the first PTRS pattern may be specifically: The network device receives the PTRS based on the first PTRS pattern. When the method is applied to the terminal device, the transmitting a PTRS based on the first PTRS pattern may be specifically: The terminal device sends the PTRS based on the first PTRS pattern.

In a possible design, that none of all PTRS groups in each PTRS pattern in an OFDM symbol is located at a tail of the OFDM symbol may be specifically: no sampling point in a last PTRS group in each PTRS pattern in the OFDM symbol is located at a last sampling point or a last modulation symbol (namely, a last QAM symbol) of the OFDM symbol; or a distance between any sampling point in a last PTRS group in each PTRS pattern in the OFDM symbol and a last sampling point or a last modulation symbol (namely, a last QAM symbol) of the OFDM symbol is greater than a preset distance threshold. In this way, it can be accurately determined that none of all PTRS groups in each PTRS pattern in the orthogonal frequency division multiplexing OFDM symbol is located at the tail of the OFDM symbol.

In a possible design, a quantity of PTRS sampling points in a PTRS group in any one of the plurality of PTRS patterns is not equal to 4. In this way, none of all PTRS groups in each PTRS pattern in the OFDM symbol is located at the tail of the OFDM symbol.

In a possible design, a specific method for the network device to determine the first PTRS pattern may be: The network device determines that a value of a first parameter is greater than or equal to a first threshold, where the first parameter includes a receive window advance; and determines the first PTRS pattern based on a value of a second parameter and a first correspondence, where the first correspondence is a correspondence between a plurality of value sets of the second parameter and a plurality of PTRS patterns, each value set corresponds to one type of PTRS pattern, and the plurality of PTRS patterns in the first correspondence are the same as the plurality of PTRS patterns included in the first PTRS pattern set. In this way, when the first parameter, for example, the receive window advance, is greater than or equal to the first threshold, the network device may determine the PTRS pattern in which none of all PTRS groups is located at the tail of the OFDM symbol, to improve the demodulation performance.

In a possible design, before the determining a first PTRS pattern, the network device receives first information from the terminal device, where the first information indicates a value set of the second parameter in a recommended second correspondence, a quantity of value sets of the second parameter is greater than 5, the second correspondence is a correspondence between a plurality of value sets of the second parameter and a plurality of PTRS patterns, and the plurality of PTRS patterns in the second correspondence include the first PTRS pattern set. In this way, the network device can know the value set of the second parameter that meets a requirement of the terminal device.

In a possible design, before the determining a first PTRS pattern, the network device sends second information to the terminal device, where the second information indicates the value set of the second parameter in the second correspondence, the quantity of value sets of the second parameter is greater than 5, the second correspondence is the correspondence between a plurality of value sets of the second parameter and a plurality of PTRS patterns, and the plurality of PTRS patterns in the second correspondence include the first PTRS pattern set. In this way, the network device can configure the value set of the second parameter for the terminal device, so that the terminal device further determines a corresponding PTRS pattern set.

In a possible design, before the determining a first PTRS pattern, the network device sends third information to the terminal device, where the third information indicates a plurality of groups of value sets of the second parameter, and a quantity of value sets of the second parameter in each group is greater than 5.

In a possible design, the network device sends fourth information to the terminal device, where the fourth information indicates a group of value sets of the second parameter, the group of value sets of the second parameter is one of the plurality of groups of value sets of the second parameter, and the group of value sets of the second parameter includes the value sets of the second parameter in the first correspondence. In this way, the network device can configure the value set of the second parameter for the terminal device, so that the terminal device further determines a corresponding PTRS pattern set.

In a possible design, the network device sends the value of the first parameter to the terminal device; the network device sends fifth information to the terminal device, where when the fifth information is a first value, the fifth information indicates whether the value of the first parameter is greater than or equal to the first threshold; or the network device sends sixth information to the terminal device, where the sixth information indicates the first correspondence. According to the foregoing method, the terminal device can determine a correspondence between a used value set of the second parameter and a PTRS pattern, and further determine the PTRS pattern.

In a possible design, a specific method for the terminal device to determine the first PTRS pattern may be: The terminal device determines a correspondence between a value set of a second parameter and a PTRS pattern as a first correspondence, where the first correspondence is a correspondence between a plurality of value sets of the second parameter and a plurality of PTRS patterns, each value set corresponds to one type of PTRS pattern, and the plurality of PTRS patterns in the first correspondence are the same as the plurality of PTRS patterns included in the first PTRS pattern set; and determines the first PTRS pattern based on a value of the second parameter and the first correspondence. In this way, the terminal device can determine the PTRS pattern in which none of all PTRS groups is located at the tail of the OFDM symbol, to improve the demodulation performance.

In a possible design, a specific method for the terminal device to determine the correspondence between a value set of a second parameter and a PTRS pattern as the first correspondence may be: The terminal device receives a value of a first parameter from the network device, and if it is determined that the value of the first parameter is greater than or equal to a first threshold, determines the correspondence between a value set of a second parameter and a PTRS pattern as the first correspondence, where the first parameter includes a receive window advance; the terminal device receives fifth information from the network device, where when the fifth information is a first value, the fifth information indicates whether a value of a first parameter is greater than or equal to a first threshold; and if the fifth information is the first value, and it is determined that the value of the first parameter is greater than or equal to the first threshold, determines the correspondence between a value set of a second parameter and a PTRS pattern as the first correspondence; or the terminal device receives sixth information from the network device, where the sixth information indicates that the correspondence between a value set of a second parameter and a PTRS pattern is the first correspondence. In this way, the terminal device can accurately determine that the correspondence between a value set of a second parameter and a PTRS pattern is the first correspondence.

In a possible design, before determining the correspondence between a value set of a second parameter and a PTRS pattern as the first correspondence, the terminal device sends first information to the network device, where the first information indicates a value set of the second parameter in a recommended second correspondence, a quantity of value sets of the second parameter is greater than 5, the second correspondence is a correspondence between a plurality of value sets of the second parameter and a plurality of PTRS patterns, and the plurality of PTRS patterns in the second correspondence include the first PTRS pattern set. In this way, the terminal device can notify, based on a capability of the terminal device, the value set of the second parameter supported by the network device.

In a possible design, before determining the correspondence between a value set of a second parameter and a PTRS pattern as the first correspondence, the terminal device receives second information from the network device, where the second information indicates the value set of the second parameter in the second correspondence, the quantity of value sets of the second parameter is greater than 5, the second correspondence is the correspondence between a plurality of value sets of the second parameter and a plurality of PTRS patterns, and the plurality of PTRS patterns in the second correspondence include the first PTRS pattern set. Further, a specific method for the terminal device to determine the correspondence between a value set of a second parameter and a PTRS pattern as the first correspondence may be: determining, based on the value set that is of the second parameter and that is indicated by the second information, the correspondence between a value set of a second parameter and a PTRS pattern as the first correspondence. In this way, the terminal device can further determine a corresponding PTRS pattern set based on the value set of the second parameter configured by the network device.

In a possible design, before determining the correspondence between a value set of a second parameter and a PTRS pattern as the first correspondence, the terminal device receives third information from the network device, where the third information indicates a plurality of groups of value sets of the second parameter, and a quantity of value sets of the second parameter in each group is greater than 5.

In a possible design, before determining the correspondence between a value set of a second parameter and a PTRS pattern as the first correspondence, the terminal device receives fourth information from the network device, where the fourth information indicates a group of value sets of the second parameter, the group of value sets of the second parameter is one of the plurality of groups of value sets of the second parameter, and the group of value sets of the second parameter includes the value sets of the second parameter in the first correspondence. A specific method for the terminal device to determine the correspondence between a value set of a second parameter and a PTRS pattern as the first correspondence may be: determining, based on the group of value sets that is of the second parameter and that is indicated by the fourth information, the correspondence between a value set of the second parameter and a PTRS pattern as the first correspondence. In this way, the terminal device can further determine a corresponding PTRS pattern set based on the value set of the second parameter configured by the network device.

In a possible design, the second parameter is a scheduled bandwidth configured by the network device for the terminal device; or the second parameter is a scheduled bandwidth configured by the network device for the terminal device and a modulation and coding scheme MCS configured by the network device for the terminal device.

In a possible design, the first parameter further includes a modulation and coding scheme MCS configured by the network device for the terminal device.

In a possible design, a specific method for determining that the value of the first parameter is greater than or equal to the first threshold may be: determining that a value of a receive window advance corresponding to a first modulation and coding scheme MCS is greater than or equal to the first threshold, where the first MCS is one of a plurality of MCSs configured by the network device for the terminal device, and thresholds of values of receive window advances corresponding to the plurality of MCSs are different.

In a possible design, the plurality of PTRS patterns in the second correspondence include a plurality of PTRS patterns in a third correspondence, and the value set of the second parameter in the first correspondence is different from a value set of the second parameter in the third correspondence.

In a possible design, the value set of the second parameter in the first correspondence is the same as a value set of the second parameter in a fourth correspondence, and at least one of the plurality of PTRS patterns in the first correspondence is different from at least one of a plurality of PTRS patterns in the fourth correspondence; and the fourth correspondence is a correspondence between a plurality of value sets of the second parameter and a plurality of PTRS patterns, and the fourth correspondence is a correspondence used when the value of the first parameter is less than the first threshold.

In a possible design, when the network device receives the PTRS from the terminal device based on the first PTRS pattern, and when a signal-to-noise ratio SNR and/or the MCS configured for the terminal device are/is greater than a preset threshold, the network device performs phase noise estimation on each PTRS group in the first PTRS pattern, and performs interpolation between obtained results of all PTRS groups, to obtain a full-symbol phase noise estimation result; or when a signal-to-noise ratio SNR and/or the modulation and coding scheme MCS configured for the terminal device are/is less than or equal to a preset threshold, the network device sequentially performs phase noise joint estimation on every two consecutive PTRS groups in the first PTRS pattern, and performs interpolation between obtained results of every two consecutive PTRS groups, to obtain a full-symbol phase noise estimation result. In this way, the network device can flexibly perform phase noise estimation, and obtain a better phase noise estimation result.

According to a second aspect, this application provides a phase tracking reference signal PTRS transmission method. The method may be applied to a network device, a chip in the network device, a functional module, or the like. Alternatively, the method may be applied to a terminal device, a chip in the terminal device, a functional module, or the like. The following uses an example in which the method is applied to the network device or the terminal device for description. Specifically, the method may include: determining a third PTRS pattern based on a value of a second parameter and a fifth correspondence, where the fifth correspondence is a correspondence between a plurality of value sets of the second parameter and a plurality of PTRS patterns, each value set corresponds to one type of PTRS pattern, the PTRS pattern indicates a distribution rule of a PTRS in an orthogonal frequency division multiplexing OFDM symbol, the PTRS pattern includes a plurality of PTRS groups, and each PTRS group includes a plurality of consecutive PTRS sampling points; and when at least one PTRS group in the third PTRS pattern in the OFDM symbol is located at a tail of the OFDM symbol, and it is determined that a value of a first parameter is greater than or equal to a first threshold, determining a fourth PTRS pattern based on the third PTRS pattern, and transmitting the PTRS based on the fourth PTRS pattern, where the first parameter includes a receive window advance.

According to the foregoing method, when a PTRS group in the determined PTRS pattern in the OFDM symbol is located at the tail of the OFDM symbol, the terminal device and the network device can further determine a new PTRS pattern, to reduce impact of the receive window advance on PTRS phase noise estimation, ensure phase noise estimation performance of the PTRS, so that demodulation performance and spectral efficiency are improved.

In a possible design, when it is determined that the value of the first parameter is less than the first threshold, the PTRS is transmitted based on the third PTRS pattern. In this way, when the receive window advance has no impact or small impact on the PTRS phase noise estimation, the network device and the terminal device can transmit the PTRS based on a current PTRS pattern.

In a possible design, a specific method for determining the fourth PTRS pattern based on the third PTRS pattern may be: adjusting a quantity of PTRS groups in the third PTRS pattern and/or a quantity of PTRS sampling points in a PTRS group, to obtain the fourth PTRS pattern. In this way, the obtained fourth PTRS pattern is not affected by impact of the receive window advance or the like on the PTRS phase noise estimation, to ensure the phase noise estimation performance of the PTRS, so that the demodulation performance and the spectral efficiency are improved.

In a possible design, a specific method for determining the fourth PTRS pattern based on the third PTRS pattern may be: multiplying the quantity of PTRS groups in the third PTRS pattern by A, and dividing a quantity of PTRS sampling points in each PTRS group in the third PTRS pattern by A, to obtain a quantity of PTRS groups in the fourth PTRS pattern and a quantity of PTRS sampling points included in each PTRS group in the fourth PTRS pattern, where A is an integer greater than or equal to 2; increasing the quantity of PTRS groups in the third PTRS pattern by B, to obtain a quantity of PTRS groups in the fourth PTRS pattern, and using a quantity of PTRS sampling points in each PTRS group in the third PTRS pattern as a quantity of PTRS sampling points in each PTRS group in the fourth PTRS pattern, where a distribution distance between last two PTRS groups in the fourth PTRS pattern is greater than a second threshold, and B is an integer greater than or equal to 1; or increasing the quantity of PTRS groups in the third PTRS pattern by K, to obtain a quantity of PTRS groups in the fourth PTRS pattern, keeping a quantity of PTRS sampling points in first H-2 PTRS groups to be the quantity of sampling points in the PTRS group in the third PTRS pattern and unchanged, and dividing a quantity of sampling points in a last PTRS group in the third PTRS pattern by L to obtain a quantity of PTRS sampling points in last two PTRS groups, to obtain a quantity of PTRS sampling points in each PTRS group in the fourth PTRS pattern, where a distribution distance between the last two PTRS groups in the fourth PTRS pattern is greater than a third threshold, K is an integer greater than or equal to 1, L is an integer greater than or equal to 2, H is the quantity of PTRS groups in the fourth PTRS pattern, and H is a positive integer greater than 2. In this way, the obtained fourth PTRS pattern is not affected by impact of the receive window advance or the like on the PTRS phase noise estimation, to ensure the phase noise estimation performance of the PTRS, so that the demodulation performance and the spectral efficiency are improved.

In a possible design, the second threshold and the third threshold each are positively correlated to a scheduled bandwidth configured by the network device for the terminal device.

In a possible design, the second parameter is the scheduled bandwidth configured by the network device for the terminal device; or the second parameter is the scheduled bandwidth configured by the network device for the terminal device and a modulation and coding scheme MCS configured by the network device for the terminal device.

In a possible design, the first parameter further includes a modulation and coding scheme MCS configured by the network device for the terminal device.

In a possible design, a specific method for determining that the value of the first parameter is greater than or equal to the first threshold may be: determining that a value of a receive window advance corresponding to a first modulation and coding scheme MCS is greater than or equal to the first threshold, where the first MCS is one of a plurality of MCSs configured by the network device for the terminal device, and thresholds of values of receive window advances corresponding to the plurality of MCSs are different.

In a possible design, that at least one PTRS group in the first PTRS pattern in the OFDM symbol is located at a tail of the OFDM symbol may include: at least one sampling point in at least one PTRS group in the first PTRS pattern in the OFDM symbol is located at a last sampling point or a last modulation symbol (namely, a last QAM symbol) of the OFDM symbol; or a distance between at least one sampling point in at least one PTRS group in the first PTRS pattern in the OFDM symbol and a last sampling point or a last modulation symbol (namely, a last QAM symbol) of the OFDM symbol is less than or equal to a preset distance threshold. In this way, it can be accurately determined that at least one PTRS group in a PTRS pattern in the OFDM symbol is located at the tail of the OFDM symbol.

In a possible design, when the method is applied to the network device, the network device sends the value of the first parameter to the terminal device; or the network device sends seventh information to the terminal device, where the seventh information indicates whether the value of the first parameter is greater than or equal to the first threshold. In this way, the terminal device can determine whether the first parameter is greater than or equal to the first threshold.

In a possible design, when the method is applied to the terminal device, the terminal device receives the value of the first parameter from the network device; or the terminal device receives and sends the seventh information from the network device, where the seventh information indicates whether the value of the first parameter is greater than or equal to the first threshold. In this way, the terminal device can determine whether the first parameter is greater than or equal to the first threshold.

In a possible design, when the method is applied to the network device, transmitting the PTRS based on the PTRS pattern may be specifically: The network device receives the PTRS based on the PTRS pattern. When the method is applied to the terminal device, transmitting the PTRS based on the PTRS pattern may be specifically: The terminal device sends the PTRS based on the PTRS pattern.

In a possible design, when the network device receives the PTRS from the terminal device based on the fourth PTRS pattern, and when a signal-to-noise ratio SNR and/or the modulation and coding scheme MCS configured for the terminal device are/is greater than a preset threshold, the network device performs phase noise estimation on each PTRS group in the fourth PTRS pattern, and performs interpolation between obtained results of all PTRS groups, to obtain a full-symbol phase noise estimation result; or when a signal-to-noise ratio SNR and/or the modulation and coding scheme MCS configured for the terminal device are/is less than or equal to a preset threshold, the network device sequentially performs phase noise joint estimation on every two consecutive PTRS groups in the fourth PTRS pattern, and performs interpolation between obtained results of every two consecutive PTRS groups, to obtain a full-symbol phase noise estimation result. In this way, the network device can flexibly perform phase noise estimation, and obtain a better phase noise estimation result.

According to a third aspect, this application further provides a phase tracking reference signal transmission apparatus, where the phase tracking reference signal transmission apparatus may be a terminal device, and the phase tracking reference signal transmission apparatus has functions of the terminal device for implementing the first aspect, the possible designs of the first aspect, the second aspect, or the possible design examples of the second aspect. The functions may be implemented by hardware, or may be implemented by executing corresponding software by hardware. The hardware or software includes one or more modules corresponding to the foregoing functions.

In a possible design, a structure of the phase tracking reference signal transmission apparatus includes a transceiver unit and a processing unit. These units may perform the corresponding functions of the terminal device in the first aspect, the possible designs of the first aspect, the second aspect, or the possible design examples of the second aspect. For details, refer to the detailed descriptions in the method example. Details are not described herein again.

In a possible design, a structure of the phase tracking reference signal transmission apparatus includes a transceiver and a processor, and optionally, further includes a memory. The transceiver is configured to send and receive data, and is configured to communicate and interact with another device in a communication system. The processor is configured to: support the phase tracking reference signal transmission apparatus in performing the corresponding functions of the terminal device in the first aspect, the possible designs of the first aspect, the second aspect, or the possible design examples of the second aspect. The memory is coupled to the processor, and stores program instructions and data that are necessary for the phase tracking reference signal transmission apparatus.

According to a fourth aspect, this application further provides a phase tracking reference signal transmission apparatus, where the phase tracking reference signal transmission apparatus may be a network device, and the phase tracking reference signal transmission apparatus has functions of the network device for implementing the first aspect, the possible designs of the first aspect, the second aspect, or the possible design examples of the second aspect. The functions may be implemented by hardware, or may be implemented by executing corresponding software by hardware. The hardware or software includes one or more modules corresponding to the foregoing functions.

In a possible design, a structure of the phase tracking reference signal transmission apparatus includes a transceiver unit and a processing unit. These units may perform the corresponding functions of the network device in the first aspect, the possible designs of the first aspect, the second aspect, or the possible design examples of the second aspect. For details, refer to the detailed descriptions in the method example. Details are not described herein again.

In a possible design, a structure of the phase tracking reference signal transmission apparatus includes a transceiver and a processor, and optionally, further includes a memory. The transceiver is configured to send and receive data, and is configured to communicate and interact with another device in a communication system. The processor is configured to: support the phase tracking reference signal transmission apparatus in performing the corresponding functions of the network device in the first aspect, the possible designs of the first aspect, the second aspect, or the possible design examples of the second aspect. The memory is coupled to the processor, and stores program instructions and data that are necessary for the phase tracking reference signal transmission apparatus.

According to a fifth aspect, an embodiment of this application provides a communication system, and the communication system may include the terminal device and the network device mentioned above.

According to a sixth aspect, an embodiment of this application provides a computer-readable storage medium, where the computer-readable storage medium stores program instructions, and when the program instructions are run on a computer, the computer is enabled to perform the method according to any one of the first aspect and the possible designs of the first aspect, or any one of the second aspect and the possible designs of the second aspect in embodiments of this application. For example, the computer-readable storage medium may be any usable medium that can be accessed by the computer. By way of example rather than limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, an embodiment of this application provides a computer program product including computer program code or instructions. When the computer program product runs on a computer, the computer is enabled to implement the method according to any one of the first aspect or the possible designs of the first aspect, or any one of the second aspect and the possible designs of the second aspect.

According to an eighth aspect, this application further provides a chip, including a processor, where the processor is coupled to a memory, and is configured to: read and execute program instructions stored in the memory, to enable the chip to implement the method according to any one of the first aspect or the possible designs of the first aspect, or any one of the second aspect and the possible designs of the second aspect.

For each of the third aspect to the eighth aspect and technical effects that can be achieved by the aspect, refer to descriptions of technical effects that can be achieved in the first aspect or the possible solutions in the first aspect. Details are not described herein again.

**BRIEF DESCRIPTION OF DRAWINGS**

FIG. 1 is a schematic diagram of phase noise power spectral density in a phase noise model;
FIG. 2 is another schematic diagram of phase noise power spectral density in a phase noise model;
FIG. 3 is a schematic diagram of a frequency domain signal without impact of phase noise when a signal is modulated in 64QAM;
FIG. 4 is a schematic diagram of impact of weak phase noise on a frequency domain signal when a signal is modulated in 64QAM;
FIG. 5 is a schematic diagram of impact of strong phase noise on a frequency domain signal when a signal is modulated in 64QAM;
FIG. 6 is a schematic diagram of distribution of a PTRS pattern in which a quantity of PTRS sampling points is 4 in FFT windows of a transmitting end and a receiving end;
FIG. 7 is a schematic diagram of an architecture of a communication system according to this application;
FIG. 8 is a schematic diagram of functional modules of a transmitting end and a receiving end according to this application;
FIG. 9 is a flowchart of a phase tracking reference signal transmission method according to this application;

FIG. 10a is a schematic flowchart of PTRS transmission according to this application;
FIG. 10b is a schematic flowchart of PTRS transmission according to this application;
FIG. 11 is a flowchart of another phase tracking reference signal transmission method according to this application;
FIG. 12 is another schematic flowchart of PTRS transmission according to this application;
FIG. 13 is a schematic diagram of PTRS pattern mapping according to this application;
FIG. 14 is a schematic diagram of a structure of a phase tracking reference signal transmission apparatus according to this application; and
FIG. 15 is a diagram of a structure of a phase tracking reference signal transmission apparatus according to this application.

## DESCRIPTION OF EMBODIMENTS

The following further describes in detail this application with reference to the accompanying drawings.

Embodiments of this application provide a phase tracking reference signal transmission method and apparatus, to improve demodulation performance. The method and the apparatus in this application are based on a same technical concept. Because the method and the apparatus have a similar principle for resolving a problem, mutual reference may be made between apparatus implementations and method implementations. Repeated descriptions are not provided again.

In descriptions of this application, terms such as "first" and "second" are merely used for a purpose of differentiation and description, but cannot be understood as indicating or implying relative importance, or cannot be understood as indicating or implying a sequence.

In the descriptions in this application, "at least one (type)" means one (type) or more (types), and "a plurality of (types)" means two (types) or more (types).

The following briefly describes some technologies in embodiments of this application, to help a person skilled in the art have a better understanding.

In a new radio (new radio, NR) protocol, in addition to supporting a cyclic prefix-orthogonal frequency division multiplexing (cyclic prefix-orthogonal frequency division multiplexing, CP-OFDM) waveform, uplink also supports a discrete Fourier transform-spread-orthogonal frequency division multiplexing (discrete Fourier transform-spread-OFDM, DFT-s-OFDM) waveform. In comparison with the CP-OFDM waveform, the DFT-s-OFDM waveform has a feature of a low peak-to-average power ratio (peak-to-average power ratio, PAPR). After modulated data of the DFT-s-OFDM waveform is arranged and before the modulated data of the DFT-s-OFDM waveform is mapped to a resource element, a discrete Fourier transform (Discrete Fourier Transform, DFT) change needs to be performed first, and may be specifically reflected by using the following formula:

$$y(k)=\frac{1}{\sqrt{N}}\sum\nolimits_{i=0}^{N-1}x(i)e^{\frac{j2\pi ik}{N}}$$

N is a quantity of subcarriers in a scheduled bandwidth; x(i) is a modulation symbol, and a modulation method includes quadrature amplitude modulation (quadrature amplitude modulation, QAM), quadrature phase shift keying (quadrature phase shift keying, QPSK) modulation, $\pi/2$ shifted binary phase shift keying ($\pi/2$ shifted binary phase shift keying, $\pi/2$-BPSK) modulation, amplitude phase shift keying (amplitude phase shift keying, APSK) modulation, nonuniform QAM modulation, and the like; and y(k) is a signal to be mapped to the subcarrier.

At a receiving end, after signal equalization is completed in frequency domain, an inverse discrete Fourier transform (Inverse Discrete Fourier Transform, IDFT) operation is performed on a signal on a subcarrier in a scheduled bandwidth on a same OFDM symbol, to restore a transmit signal.

Currently, in an operating frequency band of a communication system, a high frequency (a frequency band that is at least 6 GHz, for example, 28 GHz, 39 GHz, 60 GHz, or 73 GHz) has become a hot research and development topic in the industry for meeting increasing communication requirements because the high frequency has rich frequency band resources. Notable features of the high frequency include a large bandwidth and a highly integrated antenna array, to achieve a high throughput, and further include severe intermediate radio frequency distortion problems such as phase noise (phase noise, PHN) and a carrier frequency offset (carrier frequency offset, CFO). In addition, a Doppler shift of the high frequency is also large. All the three problems may introduce a phase error, and consequently performance of a high-frequency communication system deteriorates or even the high-frequency communication system cannot work.

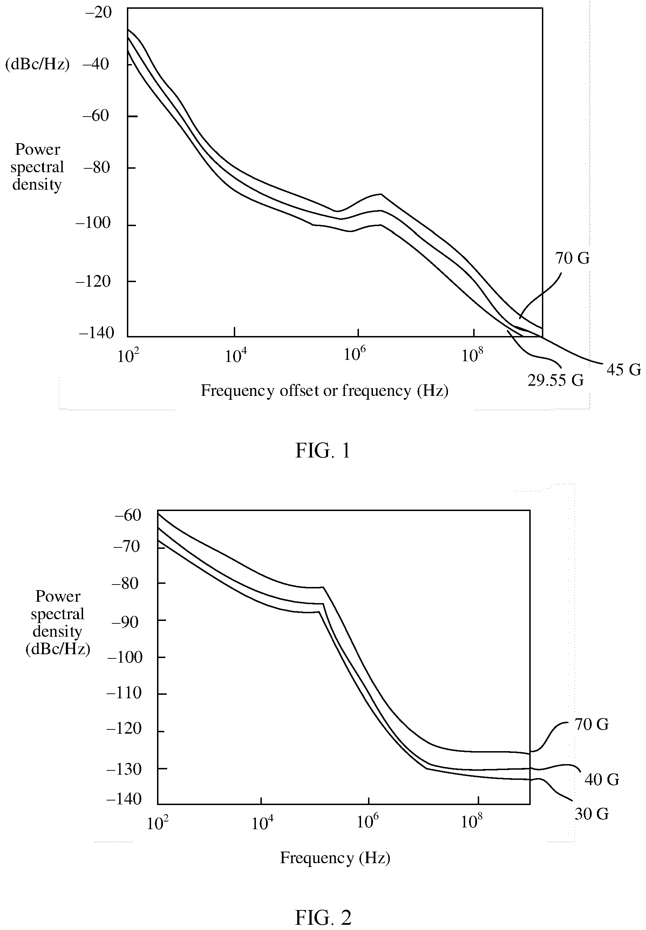

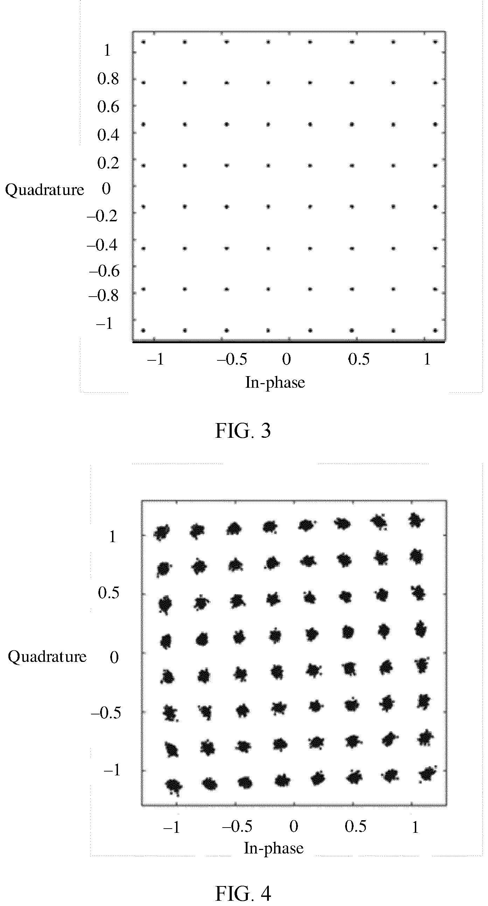

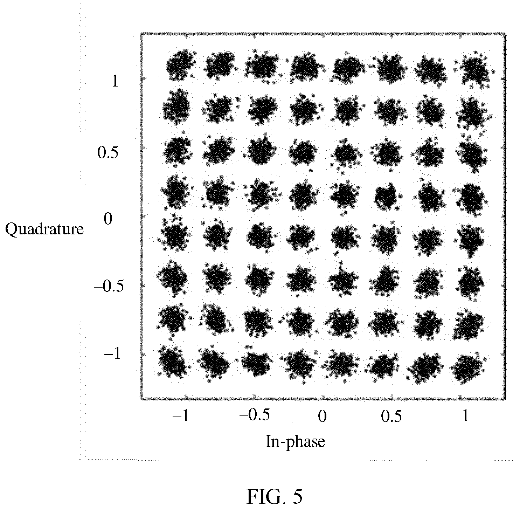

The phase noise is used as an example. An increase in a frequency band indicates higher phase noise power spectral density and greater impact on a received signal. For example, FIG. 1 and FIG. 2 show schematic diagrams of phase noise power spectral density in two different phase noise models. It can be learned from FIG. 1 and FIG. 2 that, an increase in an operating frequency band indicates higher phase noise power spectral density. For another example, FIG. 3 to FIG. 5 are schematic diagrams of impact of different phase noise on a frequency domain received signal (where a horizontal coordinate is in-phase (in-phase), and a vertical coordinate is quadrature (quadrature)). FIG. 3 is a schematic diagram of a frequency domain signal without impact of phase noise when a signal is modulated in 64QAM. FIG. 4 is a schematic diagram of impact of weak phase noise on a frequency domain signal when a signal is modulated in 64QAM. FIG. 5 is a schematic diagram of impact of strong phase noise on a frequency domain signal when a signal is modulated in 64QAM. It can be learned from FIG. 3 to FIG. 5 that, when there is the impact of the phase noise, a 64QAM constellation point rotates and spreads. In comparison with a constellation point with weak phase noise, a constellation point with strong phase noise has a higher ratio of a spread radius to a minimum Euclidean distance of a standard constellation point. It can be learned from FIG. 1 to FIG. 5 that, when a frequency band is high, deterioration of the phase noise causes demodulation performance to become poor. Therefore, in an existing NR protocol, a phase tracking reference signal (phase tracking reference signal, PTRS) is introduced for both two waveforms (CP-OFDM and DFT-s-OFDM), to compensate for impact of the phase noise and improve the demodulation performance under a phase noise condition.

Specifically, a process of transmitting the PTRS may be as follows: A transmitting end maps the PTRS to an orthogonal frequency division multiplexing (Orthogonal Frequency Division Multiplexing, OFDM) symbol based on a PTRS pattern, and sends the PTRS to a receiving end; and the receiving end receives the PTRS based on the PTRS pattern. The PTRS pattern indicates a distribution rule of the PTRS in the OFDM symbol. A PTRS pattern applicable to DFT-s-OFDM includes a plurality of PTRS groups, and each PTRS group includes a plurality of consecutive PTRS sampling points (in other words, includes a plurality of consecutive modulation symbols).

For DFT-s-OFDM, the PTRS pattern may be determined based on a scheduled bandwidth, as shown in Table 1 below. $N_{RBi}$ (i=0, 1, 2, 3, 4) is a threshold configured by a network device for a terminal device by using higher layer signaling. Then, in a data transmission process, both the network device and the terminal device determine a specific PTRS pattern in current data transmission based on Table 1 and a current scheduled bandwidth scheduled by the network device for the terminal device. For example, when a configured scheduled bandwidth $N_{RB}$ meets a condition: $N_{RB2} \leq N_{RB} < N_{RB3}$, both the network device and the terminal device determine, based on Table 1 below, that a quantity of PTRS groups in the PTRS pattern is 4, and a quantity of PTRS sampling points in a PTRS group is 2.

**Table 1 Correspondence between a scheduled bandwidth and a PTRS pattern**

| Scheduled bandwidth (Scheduled bandwidth) | Quantity of PTRS groups (Number of PTRS groups) | Quantity of sampling points in a group (Number of samples per PTRS group) |
| --- | --- | --- |
| $N_{RB0} \leq N_{RB} < N_{RB1}$ | 2 | 2 |
| $N_{RB1} \leq N_{RB} < N_{RB2}$ | 2 | 4 |
| $N_{RB2} \leq N_{RB} < N_{RB3}$ | 4 | 2 |
| $N_{RB3} \leq N_{RB} < N_{RB4}$ | 4 | 4 |
| $N_{RB4} \leq N_{RB}$ | 8 | 4 |

After the PTRS pattern (the quantity of PTRS groups and the quantity of PTRS sampling points in the group) is determined, the terminal device and the network device may further determine a specific position of the PTRS in one DFT-s-OFDM symbol. Specifically, all QAM symbols included in one DFT-s-OFDM symbol (in other words, resource elements (resource elements, REs) or subcarriers included in the scheduled bandwidth are equally divided into N (the quantity of PTRS groups) gaps. If M (the quantity of PTRS sampling points in the PTRS group)=2, one PTRS group is mapped to a middle of each gap. If M=4, a first PTRS group is mapped to a header of a first gap, a last PTRS group is mapped to a tail of a last gap, and other PTRS groups are mapped to middles of gaps.

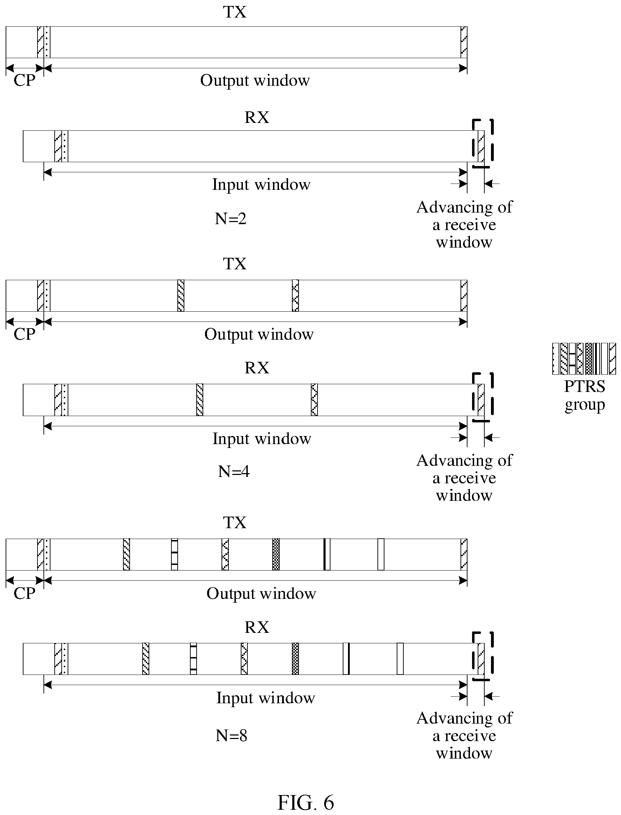

In other words, when the quantity of PTRS sampling points in the PTRS group is 4, one of the PTRS groups is distributed at a tail of the DFT-s-OFDM symbol. However, in practice, the network device usually considers one or more of impact of a multipath, impact of a timing error, or impact of different timing errors of different terminal devices, and timing of a receiving component of the network device has an advance, as shown by a fast Fourier transform (fast Fourier transform, FFT) receive window (namely, an input window in FIG. 6) in FIG. 6. In other words, there is a receive window advance. FFT is performed on signals in the receive window together, to transform the signals to a frequency domain. In other words, FFT is performed on the signals as a whole in the input window. FIG. 6 shows patterns in which quantities N of PTRS groups are respectively 2, 4, and 8 and the quantity of PTRS sampling points in the PTRS group is 4, and distribution of the PTRS pattern in an FFT window (namely, an output window) of the transmitting end (TX) and an FFT window (namely, the output window) of the receiving end (RX). It can be learned from FIG. 6 that a group of PTRSs is distributed at the tail of the DFT-s-OFDM symbol. IFFT is performed on signals as a whole in the output window.

Because a cyclic prefix (cyclic prefix, CP) is added (to be specific, after inverse fast Fourier transform (inverse fast Fourier transform, IFFT) is performed, the tail of the DFT-s-OFDM symbol is copied and added to a header of a DFT-s-OFDM signal), a signal corresponding to the PTRS group located at the tail of the DFT-s-OFDM symbol is further distributed in a CP part at the header of the DFT-s-OFDM symbol. Advancing of the receive window causes a case in which after channel equalization, a PTRS group located in the CP, namely, a front part of the receive window, is remapped to the tail of the DFT-s-OFDM symbol. However, the PTRS group actually located at the tail of the DFT-s-OFDM symbol is discarded due to the advancing of the receive window, that is, a PTRS group in a dashed box in FIG. 6 is discarded.

Phase noise estimation of the DFT-s-OFDM symbol needs to estimate a phase noise value based on each PTRS group, and interpolation is performed between the PTRS groups, to obtain a phase noise estimation value on the entire DFT-s-OFDM symbol. The PTRS group that returns to the tail of the DFT-s-OFDM signal after the equalization actually comes from the CP in the front of the DFT-s-OFDM signal. Therefore, phase noise experienced by the PTRS group at the tail of the DFT-s-OFDM signal is actually phase noise in the front of the DFT-s-OFDM symbol, but not phase noise on the PTRS group at the tail of the DFT-s-OFDM symbol. Consequently, when the phase noise estimated based on the PTRS group is used for interpolation, to estimate phase noise on the entire DFT-s-OFDM symbol, precision of phase noise estimation is significantly reduced. This further deteriorates the demodulation performance and reduces spectral efficiency.

Based on this, this application provides a phase tracking reference signal transmission method, to enable phase noise estimation of a PTRS to be not affected by a receive window advance, so that demodulation performance and spectral efficiency can be improved.

The phase tracking reference signal transmission method provided in embodiments of this application may be applied to various communication systems, such as an LTE system, an NR system, a wireless local area network (wireless local area network, WLAN), a 5th generation (5th generation, 5G) communication system, a 6th generation (6th generation, 6G) communication system or another future evolved system, any other wireless communication system that uses a radio access technology, or the like. Embodiments of this application are applicable provided that there is phase noise in the communication system. Particularly, embodiments of this application are applicable to a scenario in which high-frequency phase noise is severe. For example, this application is further applicable to the following scenarios: scenarios that have a high requirement on timing or a high requirement on a transmission rate, for example, an enhanced mobile broadband (enhanced Mobile BroadBand, eMBB) scenario, a multi-site transmission scenario (where signal transmission is performed between a same terminal device and a plurality of sites), a backhaul scenario, a wireless to the x (wireless to the x, WTTx) scenario, and a device-to-device (device-to-device, D2D) scenario. This application does not limit a waveform, and may be applied to a CP-OFDM-based or DFT-s-OFDM-based system.

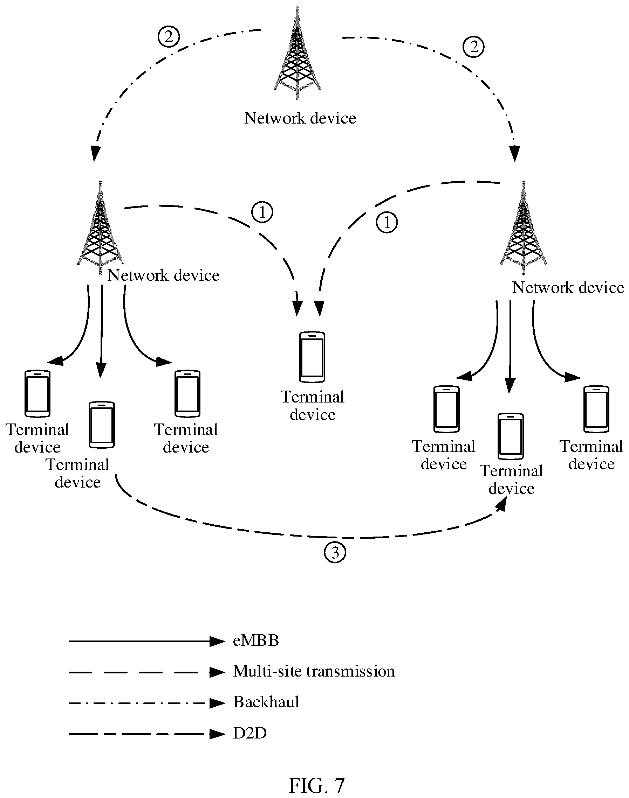

For example, FIG. 7 is a diagram of an architecture of a possible communication system to which a phase tracking reference signal transmission method is applicable according to an embodiment of this application. The communication system may include a plurality of network devices and a plurality of terminal devices.

The network device is a device with a wireless transceiver function or a chip that may be disposed in the network device. The network device may be a base station, a relay station, or an access point. For example, the network device may be a NodeB (NodeB, NB) in wideband code division multiple access (wideband code division multiple access, WCDMA), or may be an evolved NodeB (evolved NodeB, eNB or eNodeB) in LTE, or a next generation NodeB (next generation NodeB, gNodeB, or gNB) in NR. Alternatively, the network device may be a radio controller in a cloud radio access network (cloud radio access network, CRAN) scenario. Alternatively, the network device may be a base station controller (base station controller, BSC), a base transceiver station (base transceiver station, BTS), a home NodeB (for example, home evolved NodeB, or home NodeB, HNB), a baseband unit (baseband unit, BBU), or an access point (access point, AP), a wireless relay node, a wireless backhaul node, and a transmission point (transmission and reception point, TRP, or transmission point, TP) in a wireless fidelity (wireless fidelity, Wi-Fi) system, or the like, or may be a network node constituting the gNB or the transmission point, for example, a baseband unit (BBU) or a distributed unit (distributed unit, DU). Alternatively, the network device may be a base station in a future 5G network or a network device in a future evolved public land mobile network (public land mobile network, PLMN). Alternatively, the network device may be a wearable device, a vehicle-mounted device, or the like.

In some deployments, the gNB may include a central unit (central unit, CU) and a distributed unit (distributed unit, DU). The CU implements some functions of the gNB, and the DU implements some functions of the gNB. For example, the DU may be configured to implement sending and receiving of a radio frequency signal, conversion between a radio frequency signal and a baseband signal, and some baseband processing. The CU may be configured to: perform baseband processing, control a base station, and the like. In some embodiments, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. Because information at the RRC layer is finally changed into information at the PHY layer, or is changed from information at the PHY layer, in this architecture, higher layer signaling such as RRC layer signaling may also be considered to be sent by the DU, or be sent by the DU and an AAU. It may be understood that the network device may be a device that includes one or more of a CU node, a DU node, and an AAU node. In addition, the CU may be classified as a network device in an access network (radio access network, RAN), or the CU may be classified as a network device in a core network (core network, CN). This is not limited in this application.

The terminal device may also be referred to as user equipment (User Equipment, UE), an access terminal, a terminal unit, a terminal station, a mobile station, a remote station, a remote terminal, a mobile device, a wireless communication device, a terminal agent, a terminal apparatus, or the like. For example, the terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a smart wearable device (smart glasses, a smart watch, a smart headset, or the like), a wireless terminal in a smart home, or the like. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved PLMN, or the like. Alternatively, the terminal device may be a chip, a chip module (or a chip system), or the like that can be disposed in the foregoing device. In this application, a terminal device having a wireless transceiver function and a chip that can be disposed in the foregoing terminal device are collectively referred to as a terminal device.

FIG. 7 shows an example of a scenario to which this application is applicable: an eMBB scenario (shown by a solid line in FIG. 7), a multi-site transmission scenario (shown by a dashed line □ in FIG. 7), a backhaul scenario (shown by a dashed line □ in FIG. 7), a D2D scenario (shown by a dashed line □ in FIG. 7). It should be understood that the four scenarios shown in FIG. 7 are merely examples, and this is not limited in this application.

In embodiments of this application, the network device and the terminal may be deployed on the land, including indoor or outdoor, handheld, or vehicle-mounted; may be deployed on the water; or may be deployed on aircraft, a balloon, or a satellite in the air. Application scenarios of the network device and the terminal device are not limited in embodiments of this application.

It should be noted that in the phase tracking reference signal transmission method provided in embodiments of this application, a PTRS may be sent by the terminal device, a processor in the terminal device, a chip or a chip system, a functional module, or the like; and the PTRS may be received by the network device, a processor in the network device, a chip or a chip system, a functional module, or the like. An apparatus for sending the PTRS may be referred to as a transmitting end, and an apparatus for receiving the PTRS may be referred to as a receiving end.

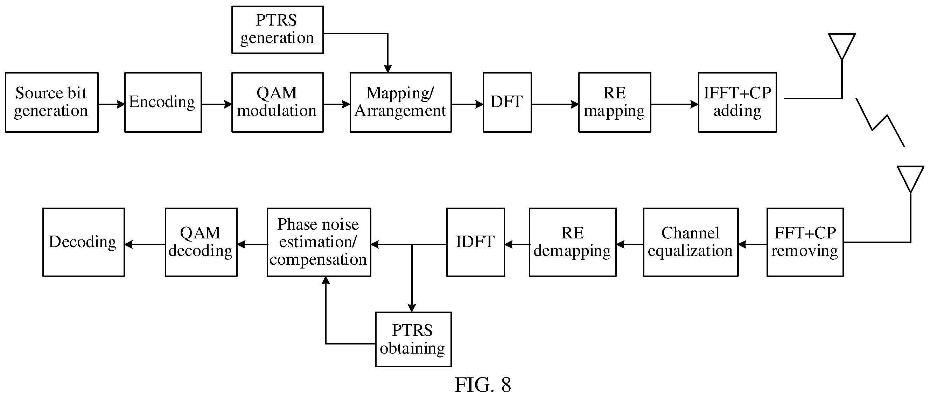

For example, FIG. 8 is a schematic diagram of functional modules of a transmitting end and a receiving end to which an embodiment of this application is applicable. The transmitting end may generate a PTRS sequence. Specifically, the transmitting end generates a source bit (a data bit stream), encodes the source bit, and performs QAM modulation on an encoded bit, to obtain a modulated data sequence. The transmitting end maps/arranges the generated PTRS sequence and the modulated data sequence (where it indicates mapping of a data QAM symbol and a QAM symbol of a PTRS before DFT), and performs a DFT operation on a mapped/arranged sequence. A sequence obtained after the DFT and a generated DMRS sequence are mapped to an RE (in other words, a DFT-s-OFDM symbol is mapped to a specified frequency domain resource), inverse fast Fourier transform (inverse fast Fourier transform, IFFT) is performed, and a CP is added to the sequence to obtain a final symbol sequence. Then, the final symbol sequence is sent to the receiving end through a channel.

The receiving end performs an inverse process that is contrary to the process performed by the transmitting end. To be specific, after receiving the symbol sequence from the transmitting end, the receiving end removes the added CP in the symbol sequence (in other words, discards a signal outside an FFT receive window), and performs fast Fourier transform (fast Fourier transform, FFT). Then, the receiving end performs channel equalization (including operations such as channel estimation). Then, the receiving end performs RE demapping and inverse discrete Fourier transform (inverse discrete Fourier transform, IDFT) on a sequence on which channel equalization is completed. Then, the receiving end obtains the PTRS, performs phase noise estimation based on the obtained PTRS, performs phase noise compensation based on the phase noise estimation, and performs QAM demodulation and decoding on a sequence obtained after the phase noise compensation, to restore the data bit stream sent by the transmitting end.

It should be noted that the CP-related operations in FIG. 8 are merely used as an example. Optionally, at least one of the following operations and modules may be further included: frequency domain spectrum shaping, serial-to-parallel conversion, parallel-to-serial conversion, a digital-to-analog converter (digital-to-analog-converter, DAC), a power amplifier (power amplifier, PA), a low noise amplifier (low noise amplifier, LNA), an analog-to-digital converter (analog-to-digital converter, ADC), and the like.

In the following embodiments, the phase tracking reference signal transmission method provided in this application is described in detail only by using an example in which the transmitting end is the terminal device and the receiving end is the network device. However, this does not constitute a limitation on this application.

In the following descriptions, all "OFDM symbols" are general terms, and the OFDM symbol may be a DFT-s-OFDM symbol or a CP-OFDM symbol. This is not limited in this application.

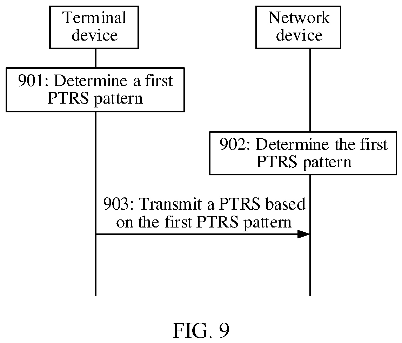

Based on the foregoing descriptions, a phase tracking reference signal transmission method provided in an embodiment of this application is applicable to the communication system shown in FIG. 7. Refer to FIG. 9. A specific procedure of the method may include the following steps.

Step 901: A terminal device determines a first PTRS pattern, where the first PTRS pattern belongs to a first PTRS pattern set, the first PTRS pattern set includes a plurality of PTRS patterns, and none of all PTRS groups in each PTRS pattern is located at a tail of an OFDM symbol; the PTRS pattern indicates a distribution rule of a PTRS in the OFDM symbol; and the PTRS pattern includes a plurality of PTRS groups, and each PTRS group includes a plurality of consecutive PTRS sampling points.

It should be noted that, in the distribution rule that is of the PTRS in the OFDM symbol and that is indicated by the PTRS pattern, the PTRS may be distributed in one or more OFDM symbols. This is not limited in this application.

The plurality of consecutive PTRS sampling points may be QAM symbols, for example, may be QAM symbols before DFT, or may be QAM symbols after IDFT.

In an optional implementation, that none of all PTRS groups in each PTRS pattern in the OFDM symbol is located at the tail of the OFDM symbol may be specifically either of the following two cases.

Case a1: No sampling point in a last PTRS group in each PTRS pattern in the OFDM symbol is located at a last sampling point or a last QAM symbol of the OFDM symbol.

Case a2: A distance between any sampling point in a last PTRS group in each PTRS pattern in the OFDM symbol and a last sampling point or a last QAM symbol of the OFDM symbol is greater than a preset distance threshold.

For example, a quantity of PTRS sampling points in a PTRS group in any one of the plurality of PTRS patterns is not equal to 4. In this way, it can also be ensured that none of all PTRS groups in the first PTRS pattern determined by the terminal device in the OFDM symbol is located at the tail of the OFDM symbol.

Optionally, a specific method for the terminal device to determine the first PTRS pattern may be: The terminal device determines a correspondence between a value set of a second parameter and a PTRS pattern as a first correspondence, and determines the first PTRS pattern based on a value of the second parameter and the first correspondence, where the first correspondence is a correspondence between a plurality of value sets of the second parameter and a plurality of PTRS patterns, each value set corresponds to one type of PTRS pattern, and the plurality of PTRS patterns in the first correspondence are the same as the plurality of PTRS patterns included in the first PTRS pattern set. In other words, the plurality of PTRS patterns in the first correspondence form the first PTRS pattern set. It may also be understood as that the correspondence is a correspondence between the value set of the second parameter and the first PTRS pattern set.

The value set of the second parameter in any correspondence may correspond to a threshold of the second parameter, and may represent a plurality of value intervals (or referred to as threshold intervals, intervals, value ranges, threshold ranges, or the like).

For example, the second parameter may be a scheduled bandwidth configured by a network device for the terminal device; or the second parameter may be a scheduled bandwidth configured by a network device for the terminal device and a modulation and coding scheme (modulation and coding scheme, MCS) configured by the network device for the terminal device.

For example, the correspondence between a value set of a second parameter and a PTRS pattern may be predefined. An example in which the second parameter is the scheduled bandwidth configured by the network device for the terminal device is used below for detailed description.

In a first possible example, a value set of the PTRS pattern is extended (where a value of the PTRS pattern is a quantity of PTRS groups in the PTRS pattern and a quantity of PTRS sampling points in each PTRS group), so that in a conventional technology, a PTRS pattern in which a quantity of PTRS sampling points in each PTRS group is 4 may correspond to a PTRS pattern in which a quantity of PTRS sampling points is not 4, where the "correspondence" may be understood as same or close PTRS overheads, or a same or close quantity of PTRS sampling points. That is, values of $Ng*Ns$ are equal or close, where $Ng$ represents the quantity of PTRS groups, and $Ns$ represents the quantity of sampling points in the PTRS group. In addition, a correspondence between a plurality of value sets of the second parameter and a PTRS pattern is defined, and when impact of a receive window advance exists, the PTRS pattern in which a quantity of sampling points is not 4 may be configured, to avoid a problem in the conventional technology that poor demodulation performance is caused by the PTRS pattern in which a quantity of sampling points is 4 when the impact of the receive window advance exists. In this example, it may be understood as that the PTRS pattern is added or extended in the foregoing Table 1.

For example, it is assumed that the PTRS pattern in which a quantity of PTRS sampling points in a PTRS group is 4 is $[Ng, Ns]=[Ng, 4]$, where $Ng$ represents the quantity of PTRS groups in the PTRS pattern, in other words, a quantity of PTRS groups in the OFDM symbol (for example, a DFT-s-OFDM symbol), that is, $N_{group}^{PT\text{-}RS}$. Ns represents the quantity of PTRS sampling points included in each PTRS group, that is, $N_{samp}^{group}$. Currently, when Ns=4, there is one PTRS group distributed at a tail of the DFT-s-OFDM symbol, and the impact of the receive window advance is great. When Ns=2, all PTRS groups are distributed at middles of gaps, there is no PTRS group distributed at a tail of the DFT-s-OFDM symbol, and the impact of the receive window advance is small. Therefore, a current PTRS pattern set (namely, the PTRS pattern included in Table 1) can be added or extended, so that each PTRS pattern of [Ng, Ns]=[Ng, 4] can correspond to one pattern in which Ns#4 and that has similar overheads or same overheads. For example, the PTRS pattern of [Ng, 4] may correspond to a PTRS pattern of [2Ng, 2].

For example, a correspondence between a scheduled bandwidth and a PTRS pattern is shown in Table 2 below, and PTRS patterns, in the correspondence, of bold and italic fonts in Table 2 are newly added PTRS patterns in comparison with those in Table 1. [Ng, Ns]=[8, 2] corresponds to [Ng, Ns]=[4, 4], and [Ng, Ns]=[16, 2] corresponds to [Ng, Ns]=[8, 4].

**Table 2 Correspondence between a scheduled bandwidth and a PTRS pattern**

| Scheduled bandwidth (Scheduled bandwidth) | Quantity of PTRS groups (Number of PTRS groups) | Quantity of sampling points in a group (Number of samples per PTRS group) |
|---|---|---|
| $N_{RB0} \leq N_{RB} < N_{RB1}$ | 2 | 2 |
| $N_{RB1} \leq N_{RB} < N_{RB2}$ | 2 | 4 |
| $N_{RB2} \leq N_{RB} < N_{RB3}$ | 4 | 2 |
| $N_{RB3} \leq N_{RB} < N_{RB4}$ | 4 | 4 |
| $\boldsymbol{N_{RB4} \leq N_{RB} < N_{RB5}}$ | *8* | *2* |
| $N_{RB5} \leq N_{RB} < N_{RB6}$ | 8 | 4 |
| $\boldsymbol{N_{RB6} \leq N_{RB}}$ | *16* | *2* |

It can be learned that in comparison with content in current Table 1, two new PTRS patterns are added. It should be noted that a quantity of newly added PTRS patterns, a specific quantity of PTRS groups in each PTRS pattern and a quantity of sampling points in a group (in other words, a quantity of PTRS sampling points in the group), and a row in which the newly added PTRS pattern is located in the table are merely examples. This is not limited to a case of Table 2. For example, the quantity of newly added PTRS patterns may alternatively be 3, 4, 1, or another value, and the newly added PTRS pattern may alternatively be at least one of [Ng, Ns]=[4, 3], [6, 3], [8, 3], [10, 3], or the like.

Optionally, when a new quantity of PTRS sampling points in a group is defined, for example, Ns=3, a new mapping rule may be further defined for a PTRS pattern of this type. For example, all PTRS patterns are mapped to headers of gaps. Certainly, there may be another mapping rule. This is not limited in this application.

In a second possible example, a correspondence between a group of value sets of the second parameter and a plurality of PTRS pattern sets may be defined for different scenarios, where any two of the plurality of PTRS pattern sets may have at least one different PTRS pattern. In other words, a same value set of the second parameter in different scenarios corresponds to different PTRS pattern sets. For example, as shown by a correspondence between a scheduled bandwidth and a PTRS pattern in Table 3 below, in one correspondence, a quantity of PTRS sampling points in a group in any PTRS pattern in a PTRS pattern set is not 4. In other words, none of PTRS groups in all PTRS patterns in the PTRS pattern set is located at the tail of the OFDM symbol.

**Table 3 Correspondence between a scheduled bandwidth and a PTRS pattern**

| Scheduled bandwidth | Current PTRS pattern | | Newly added PTRS pattern | |
|---|---|---|---|---|
| | Quantity of PTRS groups (Number of PTRS groups) | Quantity of sampling points in a group (Number of samples per PTRS group) | Quantity of PTRS groups (Number of PTRS groups) | Quantity of sampling points in a group (Number of samples per PTRS group) |
| $N_{RB0} \leq N_{RB} < N_{RB1}$ | 2 | 2 | 2 | 2 |

(continued)

| Scheduled bandwidth | Current PTRS pattern | | Newly added PTRS pattern | |
|---|---|---|---|---|
| | Quantity of PTRS groups (Number of PTRS groups) | Quantity of sampling points in a group (Number of samples per PTRS group) | Quantity of PTRS groups (Number of PTRS groups) | Quantity of sampling points in a group (Number of samples per PTRS group) |
| $N_{RB1} \leq N_{RB} < N_{RB2}$ | 2 | 4 | 4 | 2 |
| $N_{RB2} \leq N_{RB} < N_{RB3}$ | 4 | 2 | 4 | 2 |
| $N_{RB3} \leq N_{RB} < N_{RB4}$ | 4 | 4 | 8 | 2 |
| $N_{RB4} \leq N_{RB}$ | 8 | 4 | 16 | 2 |

It can be learned from Table 3 that, in comparison with the correspondence in current Table 1, a correspondence between the scheduled bandwidth and a newly added PTRS pattern set (to be specific, a plurality of newly added PTRS patterns, or a plurality of newly added PTRS patterns) is newly added. In other words, there is a correspondence between the scheduled bandwidth and the current PTRS pattern set (to be specific, a plurality of current PTRS patterns, or a plurality of current PTRS patterns) in Table 3, and there is another correspondence between the scheduled bandwidth and the newly added PTRS pattern set in Table 3. A proper correspondence is selected based on different scenarios and the like to determine a required PTRS pattern.

It should be noted that a value of the quantity of PTRS groups and a value of the quantity of sampling points in the group that correspond to the newly added PTRS pattern in Table 3 are merely examples, and may alternatively be other values. This is not limited in this application.

For example, in a first possible example, the first correspondence may be a correspondence between the scheduled bandwidth and a PTRS pattern other than the PTRS pattern in which a quantity of sampling points in a group is 4 in Table 2. To be specific, in this case, the plurality of PTRS patterns included in the first PTRS pattern set may be the PTRS patterns in which quantities of PTRS groups and quantities of sampling points in groups are respectively [2, 2], [4, 2], [8, 2], and [16, 2] in Table 2. In a second possible example, the first correspondence may be the correspondence between the scheduled bandwidth and a newly added PTRS pattern set in Table 3. To be specific, in this case, the plurality of PTRS patterns included in the first PTRS pattern set may be the PTRS patterns in which quantities of PTRS groups and quantities of sampling points in groups are respectively [2, 2], [4, 2], [8, 2], and [16, 2] in Table 3. It should be noted that, in Table 3, thresholds of the scheduled bandwidth corresponding to the PTRS pattern of [4, 2] are $N_{RB1}$ and $N_{RB3}$. In other words, the scheduled bandwidth within an interval range of $N_{RB1} \leq N_{RB} < N_{RB3}$ corresponds to the PTRS pattern of [4, 2]. In other words, in comparison with the correspondence in Table 1, in this correspondence, the scheduled bandwidth does not change, but only a corresponding PTRS pattern changes.

In an optional implementation, that the terminal device determines a correspondence between a value set of a second parameter and a PTRS pattern as a first correspondence may specifically include the following three methods.

Method b1: The terminal device receives a value of a first parameter from the network device, and if it is determined that the value of the first parameter is greater than or equal to a first threshold, determines the correspondence between a value set of a second parameter and a PTRS pattern as the first correspondence.

Method b2: The terminal device receives fifth information from the network device, where when the fifth information is a first value, the fifth information may indicate whether a value of a first parameter is greater than or equal to a first threshold; and if the fifth information is the first value, and the terminal device determines that the value of the first parameter is greater than or equal to the first threshold, the terminal device determines the correspondence between a value set of a second parameter and a PTRS pattern as the first correspondence.

Method b3: The terminal device receives sixth information from the network device, where the sixth information indicates that the correspondence between a value set of a second parameter and a PTRS pattern is the first correspondence.

Correspondingly, similar to the method b1, when the terminal device determines that the value of the first parameter received from the network device is less than the first threshold, the terminal device determines the correspondence between a value set of a second parameter and a PTRS pattern as a third correspondence or a fourth correspondence.

The third correspondence and the fourth correspondence are correspondences between the value set of the second parameter and a plurality of PTRS patterns.

The third correspondence is the correspondence determined by the terminal device in the foregoing first possible example. For example, the plurality of PTRS patterns in the third correspondence may be the PTRS patterns in which quantities of PTRS groups and quantities of sampling points in groups are respectively [2, 2], [2, 4], [4, 2], [4, 4], and [8, 4] in Table 2. That is, a PTRS pattern set in the third correspondence includes and includes only {[2, 2], [2, 4], [4, 2], [4, 4], [8, 4]}.

It should be noted that, that the value of the first parameter is greater than or equal to the first threshold is classified as a solution, and that the value of the first parameter is less than the first threshold is classified as another solution. It should be understood that this is merely an example. Alternatively, that the value of the first parameter is greater than the first threshold is classified as a solution, and that the value of the first parameter is less than or equal to the first threshold is classified as another solution. That is, "equal to" may be combined with "greater than" or may be combined with "less than". This is not limited in this application. It should be understood that in the descriptions of this application, another case involving "equal to" is the same.

For example, when the first correspondence is the correspondence in the first possible example, a threshold corresponding to the value set of the second parameter in the first correspondence is different from a threshold corresponding to the value set of the second parameter in the third correspondence. That the threshold corresponding to the value set of the second parameter in the first correspondence is different from the threshold corresponding to the value set of the second parameter in the third correspondence may mean that there is at least one different threshold.

The fourth correspondence is the correspondence determined by the terminal device in the second possible example. For example, the fourth correspondence may be a correspondence between the scheduled bandwidth and the current PTRS pattern set in Table 3.

For example, when the first correspondence is the correspondence in the second possible example, the value set of the second parameter in the first correspondence is the same as the value set of the second parameter in the fourth correspondence, and at least one of the plurality of PTRS patterns in the first correspondence is different from at least one of the plurality of PTRS patterns in the fourth correspondence.

Similar to the method b2, if the fifth information is the first value, the fifth information indicates that the value of the first parameter is less than the first threshold, and the terminal device determines the correspondence between a value set of a second parameter and a PTRS pattern as the third correspondence or the fourth correspondence.

Similar to the method b3, the sixth information may indicate that the correspondence between a value set of a second parameter and a PTRS pattern is the first correspondence; or the sixth information may indicate that the correspondence between a value set of a second parameter and a PTRS pattern is the third correspondence or the fourth correspondence. When the sixth information indicates that the correspondence between a value set of a second parameter and a PTRS pattern is the first correspondence, this is a case in the method b3, and the terminal device may determine the correspondence between a value set of a second parameter and a PTRS pattern as the first correspondence. When the sixth information indicates that the correspondence between a value set of a second parameter and a PTRS pattern is the third correspondence or the fourth correspondence, the terminal device determines the correspondence between a value set of a second parameter and a PTRS pattern as the third correspondence or the fourth correspondence.

Further, after determining the third correspondence or the fourth correspondence, the terminal device determines a second PTRS pattern based on the value of the second parameter and the third correspondence or the fourth correspondence, and sends the PTRS to the network device based on the second PTRS pattern.

Optionally, that the value of the first parameter is greater than the first threshold may specifically include the following three cases.

Case c1: The first parameter is the receive window advance, and a value of the receive window advance is greater than or equal to the first threshold.

Case c2: The first parameter includes the receive window advance and the MCS, and a value of the receive window advance and a value of the MCS are both greater than or equal to respective corresponding first thresholds. It should be understood that the first threshold of the value of the receive window advance is different from the first threshold of the value of the MCS, and values of the respective thresholds are not limited in this application.

Case c3: The first parameter includes the receive window advance, but different MCSs may define different receive advance thresholds. That a value of the receive window advance is greater than or equal to the first threshold is specifically that a value of a receive window advance corresponding to a first MCS is greater than or equal to the first threshold, where the first MCS is one of a plurality of MCSs configured by the network device for the terminal device, and thresholds of values of receive window advances corresponding to the plurality of MCSs are different.

Correspondingly, a condition for determining that the value of the first parameter is less than the first threshold is similar to a condition for determining that the value of the first parameter is greater than or equal to the first threshold. Details are not described in this application again.

Optionally, determining that the value of the first parameter is greater than or equal to the first threshold is determining that the value of the first parameter meets a preset condition. The preset condition may include: The receive window advance is greater than or equal to the first threshold, or the receive window advance and the MCS meet a first condition. That the receive window advance and the MCS meet a first condition may include: Both the receive window advance and the MCS are greater than or equal to respective thresholds, or the value of the receive window advance corresponding to the first MCS is greater than or equal to the first threshold. It should be understood that when the value of the first parameter does not meet the preset condition, the value of the first parameter is less than the first threshold. Details are not described herein again.

In an optional implementation, before the terminal device determines the first PTRS pattern, the terminal device may recommend a group of value sets of the second parameter to the network device based on a hardware capability of the terminal device (where this is implemented by reporting a recommended threshold). For example, in the first possible example, the terminal device may send first information to the network device, where the first information indicates a value set of the second parameter in a recommended second correspondence, a quantity of value sets of the second parameter is greater than 5, the second correspondence is a correspondence between a plurality of value sets of the second parameter and a plurality of PTRS patterns (which may be referred to as a second PTRS image set), and the plurality of PTRS patterns in the second correspondence include the first PTRS pattern set. The second PTRS pattern set in the second correspondence may include the plurality of PTRS patterns in the third correspondence and the plurality of PTRS patterns in the first correspondence. In other words, a union set of the plurality of PTRS patterns in the third correspondence and the plurality of PTRS patterns in the first correspondence is the second PTRS pattern set. For example, the plurality of value sets of the second parameter in the second correspondence may include a value set of the scheduled bandwidth shown in Table 2. It can be learned that a quantity of value sets of the scheduled bandwidth in Table 2 is seven, and is greater than five.

In the second possible example, the terminal device may report five value sets of the second parameter to the network device according to an existing procedure. That is, different pattern sets correspond to a same value set of the second parameter. For example, the value sets that are of the second parameter and that are reported by the terminal device to the network device may be five value sets of the scheduled bandwidth shown in Table 3.

Similarly, before the terminal device determines the first PTRS pattern, the network device configures the value set of the second parameter for the terminal device, to notify the terminal device of an effective value set of the second parameter in a data transmission process.

For example, in the second possible example, the network device may configure five value sets of the second parameter for the terminal device according to the existing procedure. For example, the value sets that are of the second parameter and that are configured by the network device for the terminal device may be five value sets of the scheduled bandwidth shown in Table 3.

For example, in the first possible example, a method for the network device to configure the value set of the second parameter for the terminal device may include the following two methods.

Method d1: The terminal device receives second information from the network device, where the second information indicates the value set of the second parameter in the second correspondence, and the quantity of value sets of the second parameter is greater than 5.

Further, when determining the correspondence between a value set of a second parameter and a PTRS pattern as the first correspondence, the terminal device may determine, based on the value set that is of the second parameter and that is indicated by the second information, the correspondence between a value set of a second parameter and a PTRS pattern as the first correspondence.

Method d2: The terminal device receives third information from the network device, where the third information indicates a plurality of groups of value sets of the second parameter, and a quantity of value sets of the second parameter in each group is greater than 5. Then, the terminal device receives fourth information from the network device, where the fourth information indicates a group of value sets of the second parameter, the group of value sets of the second parameter is one of the plurality of groups of value sets of the second parameter, and the group of value sets of the second parameter includes the value sets of the second parameter in the first correspondence.

Further, when determining the correspondence between a value set of a second parameter and a PTRS pattern as the first correspondence, the terminal device may determine, based on the group of value sets that is of the second parameter and that is indicated by the fourth information, the correspondence between a value set of a second parameter and a PTRS pattern as the first correspondence.

Optionally, the fourth information may indicate a group of value sets of the second parameter by indicating whether the value of the first parameter is greater than or equal to the first threshold, by indicating the value of the first parameter, or by directly indicating a group of thresholds of the second parameter.

Optionally, the network device may send the second information or the third information by using higher layer signaling, and the network device may send the fourth information by using downlink control information (downlink control information, DCI).

Optionally, the fourth information may also be the higher layer signaling. When the fourth information is the higher layer signaling, effective time of the fourth information is different from effective time of the third information. The effective time of the third information is longer than the effective time of the fourth information, or an (average) update frequency of the fourth information is higher, and an (average) update periodicity of the fourth information is shorter.

It should be understood that the value set that is of the second parameter and that is configured by the network device may alternatively include the value set of the second parameter in the third correspondence.

Both a quantity of value sets that is of the second parameter and that is reported by the terminal device and a quantity of value sets that is of the second parameter and that is configured by the network device are the same as a quantity of the plurality of PTRS patterns included in the second PTRS pattern set in the second correspondence.

For example, in the first possible example, the network device may configure the value set of the second parameter for the terminal device according to the following rules.

Rule 1: When the value of the first parameter is less than the first threshold (in other words, when the value of the first parameter does not meet the preset condition), the network device may configure a value of the value set of the second parameter, so that an interval is an empty set to invalidate a newly added PTRS pattern in comparison with a currently existing PTRS pattern. For example, the newly added PTRS pattern is [8, 2] or [16, 2]. For example, Table 2 is used as an example. If $N_{RB4}=N_{RB5}$, the PTRS pattern of [Ng, Ns]=[8, 2] may be invalidated. If $N_{RB6}=N_{PRBmax}+1$, the PTRS pattern of [Ng, Ns]=[16, 2] may be invalidated, where $N_{PRBmax}$ is a maximum quantity of physical resource blocks (physical resource blocks, PRBs) in the scheduled bandwidth.

According to the rule 1, the terminal device and the network device may subsequently determine the required PTRS pattern based on the third correspondence.

Optionally, if the terminal device determines, based on the hardware capability of the terminal device, for example, a phase noise level, that the first parameter has no impact on the terminal device, the terminal device may alternatively report $N_{RB4}=N_{RB5}$ and/or $N_{RB6}=N_{PRBmax}+1$ to indicate that the newly added PTRS pattern, for example, [8, 2] or [16, 2] is not required.

Rule 2: When the value of the first parameter is greater than or equal to the first threshold (in other words, when the value of the first parameter meets the preset condition), the network device may configure a value of the value set of the second parameter, so that an interval is an empty set to invalidate some of PTRS patterns that cause the tail of the OFDM symbol (for example, the DFT-s-OFDM symbol) to have a PTRS group. For example, Table 2 is used as an example. If $N_{RB2}=N_{RB1}$, the PTRS pattern of [Ng, Ns]=[2, 4] may be invalidated. If $N_{RB4}=N_{RB3}$, the PTRS pattern of [Ng, Ns]=[4, 4] may be invalidated. If $N_{RB6}=N_{RB5}$, the PTRS pattern of [Ng, Ns]=[8, 4] may be invalidated.

According to the rule 2, the terminal device and the network device may subsequently determine the required PTRS pattern based on the first correspondence.

Specifically, when the value of the first parameter, for example, the receive window advance, dynamically changes based on a scenario, for example, a quantity of scheduled users or a quantity of multipaths in a channel environment, the network device needs to dynamically adjust a PTRS pattern determining rule, to be specific, dynamically configure the value set of the second parameter. For example, when the quantity of scheduled users is small or the quantity of multipaths in the channel environment is small, and the receive window advance is small, the impact of the receive window advance can be ignored, and the network device may perform configuration according to the rule 1; or when the quantity of scheduled users is large or the quantity of multipaths in the channel environment is large, the impact of the receive window advance cannot be ignored, and the network device may perform configuration according to the rule 2. Different from configuration in the conventional technology in which configuration is performed only once, in this application, dynamic configuration may be performed based on the scenario, in other words, configuration may be performed for a plurality of times.

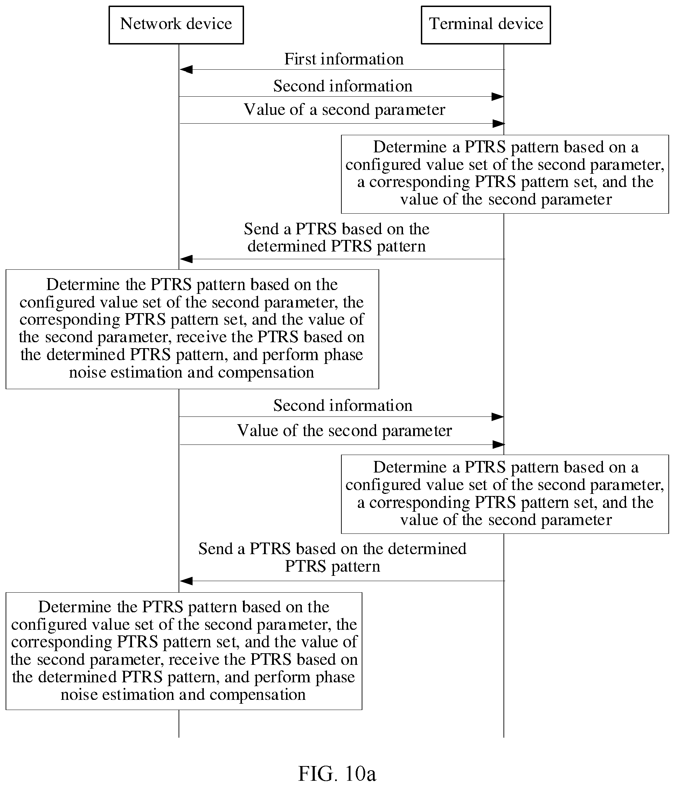

For example, a method in which the network device configures the value set of the second parameter according to the method d1 is used as an example for description. In a PTRS transmission procedure shown in FIG. 10a, the terminal device first reports a plurality of recommended value sets of the second parameter by using the first information (where this is implemented by reporting the recommended threshold). Then, the network device configures the value set of the second parameter (in other words, configures the threshold of the second parameter) for the terminal device based on a current scenario by using the second information. Then, the terminal device determines a PTRS pattern based on the configured value set of the second parameter, a corresponding PTRS pattern set, and the value of the second parameter, and sends a PTRS based on the determined PTRS pattern. The network device determines the PTRS pattern based on the configured value set of the second parameter, the corresponding PTRS pattern set, and the value of the second parameter, receives the PTRS based on the determined PTRS pattern, and performs phase noise estimation and compensation. Then, because the scenario changes, the previous configuration of the network device no longer matches a channel, and the network device reconfigures the value set of the second parameter (in other words, configures the threshold of the second parameter) for the terminal device based on a changed scenario by using the second information. Then, the terminal device determines a PTRS pattern based on the configured value set of the second parameter, a corresponding PTRS pattern set, and the value of the second parameter, and sends a PTRS based

17

on the determined PTRS pattern. The network device determines the PTRS pattern based on the configured value set of the second parameter, the corresponding PTRS pattern set, and the value of the second parameter, receives the PTRS based on the determined PTRS pattern, and performs phase noise estimation and compensation. It can be learned from FIG. 10a that the network device may perform a configuration process for a plurality of times, and FIG. 10a only shows an example in which the configuration process is performed twice.

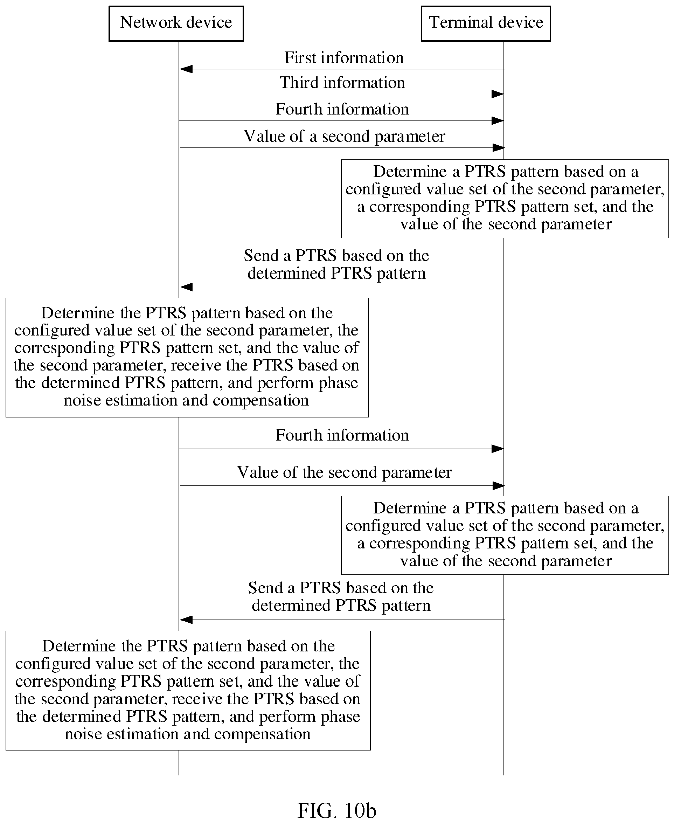

For example, a method in which the network device configures the value set of the second parameter according to the method d2 is used as an example for description. In a PTRS transmission procedure shown in FIG. 10b, the terminal device first reports a plurality of recommended value sets of the second parameter by using the first information (where this is implemented by reporting the recommended threshold). Then, the network device configures the value set of the second parameter (in other words, configures the threshold of the second parameter) for the terminal device based on a current scenario by using the third information and the fourth information. Then, the terminal device determines a PTRS pattern based on the configured value set of the second parameter, a corresponding PTRS pattern set, and the value of the second parameter, and sends a PTRS based on the determined PTRS pattern. The network device determines the PTRS pattern based on the configured value set of the second parameter, the corresponding PTRS pattern set, and the value of the second parameter, receives the PTRS based on the determined PTRS pattern, and performs phase noise estimation and compensation. Then, because the scenario changes, the previous configuration of the network device no longer matches a channel, and the network device reconfigures the value set of the second parameter (in other words, configures the threshold of the second parameter) for the terminal device based on a changed scenario by using the fourth information, or reconfigures the value set of the second parameter (in other words, configures the threshold of the second parameter) for the terminal device by using the third information and the fourth information. Then, the terminal device determines a PTRS pattern based on the configured value set of the second parameter, a corresponding PTRS pattern set, and the value of the second parameter, and sends a PTRS based on the determined PTRS pattern. The network device determines the PTRS pattern based on the configured value set of the second parameter, the corresponding PTRS pattern set, and the value of the second parameter, receives the PTRS based on the determined PTRS pattern, and performs phase noise estimation and compensation. It can be learned from FIG. 10b that the network device may perform a configuration process for a plurality of times. FIG. 10b only shows an example in which configuration is performed based on the fourth information twice.

It should be noted that the foregoing examples are all described by using an example in which the second parameter is the scheduled bandwidth configured by the network device for the terminal device. Optionally, when the second parameter is the scheduled bandwidth configured by the network device for the terminal device and the MCS configured by the network device for the terminal device, the correspondence between a value set of a second parameter and a PTRS pattern is that the PTRS pattern is related to both the scheduled bandwidth and the MCS, or the PTRS pattern is determined by both the scheduled bandwidth and the MCS. For example, Table 4 below shows an example of a correspondence between a scheduled bandwidth and an MCS and a PTRS pattern. "None" indicates that the PTRS is not mapped, the PTRS does not exist, or there is no PTRS.

**Table 4 Correspondence between a scheduled bandwidth and an MCS and a PTRS pattern**

| Correlation factor | $[N_{RB0}, N_{RB1})$ | $[N_{RB1}, N_{RB2})$ | $[N_{RB2}, N_{RB3})$ | $[N_{RB3}, N_{RB4})$ | $[N_{RB4}, +\infty)$ |
|---|---|---|---|---|---|
| $[MCS_0, MCS_1)$ | None | [2, 4] | [4, 2] | [4, 4] | [8, 4] |
| $[MCS_1, MCS_2)$ | [2, 2] | [4, 2] | [4, 2] | [8, 2] | [8, 4] |
| $[MCS_2, MCS_3)$ | [2, 2] | [4, 2] | [4, 2] | [8, 2] | [16, 2] |

As shown in Table 4, in a same MCS interval, different scheduled bandwidths may correspond to different PTRS patterns. For example, in $[MCS_1, MCS_2)$, a PTRS pattern corresponding to $[N_{RB1}, N_{RB2})$ is [4, 2], and a pattern corresponding to $[N_{RB3}, N_{RB4})$ is [8, 2]. For another example, in a same scheduled bandwidth interval, different MCSs may correspond to different PTRS patterns. For example, in $[N_{RB3}, N_{RB4})$, a PTRS pattern corresponding to $[MCS_1, MCS_2)$ is [8, 2], and a PTRS pattern corresponding to $[MCS_0, MCS_1)$ is [4, 4].

It should be noted that Table 4 is merely an example, and there are other possible cases, and the cases are not listed one by one herein.

Step 902: The network device determines the first PTRS pattern.

Specifically, the PTRS pattern determined by the network device is the same as that determined by the terminal device. This application is described by using the first PTRS pattern as an example.

In an optional implementation, a specific method for the network device to determine the first PTRS pattern may be: The network device determines that the value of the first parameter is greater than or equal to the first threshold; and the network device determines the first PTRS pattern based on the value of the second parameter and the first correspondence. For specific descriptions of the first correspondence, refer to related content in step 901, and details are not described herein again.

Optionally, when determining that the value of the first parameter is less than or equal to the first threshold, the network device determines the second PTRS pattern based on the value of the second parameter and the third correspondence or the fourth correspondence, and subsequently receives the PTRS based on the second PTRS pattern. For specific descriptions of the third correspondence or the fourth correspondence, refer to related content in step 901, and details are not described herein again.

Specifically, for related descriptions that the value of the first parameter is greater than or equal to the first threshold, or that the value of the first parameter is less than the first threshold, refer to related descriptions in step 901, and details are not described herein again.

Similarly, a method for the network device to determine the first PTRS pattern based on the value of the second parameter and the first correspondence is similar to a method for the terminal device to determine the first PTRS pattern based on the value of the second parameter and the first correspondence, and mutual reference may be made. Details are not described herein again.

Step 903: The terminal device and the network device transmit the PTRS based on the first PTRS pattern.

That the terminal device transmits the PTRS based on the first PTRS pattern is that the terminal device sends the PTRS to the network device based on the first PTRS pattern.

That the network device transmits the PTRS based on the first PTRS pattern is that the network device receives the PTRS from the terminal device based on the first PTRS pattern.

In an optional implementation, when the network device receives the PTRS from the terminal device based on the first PTRS pattern, the network device may select different phase noise estimation algorithms based on actual situations to perform phase noise estimation. For example, when a signal-to-noise ratio (signal-to-noise ratio, SNR) and/or the MCS are/is greater than a preset threshold (that is, the SNR and/or the MCS are/is high, and impact of noise on estimation precision is less than that of the receive window advance), the network device may perform phase noise estimation on each PTRS group in the first PTRS pattern, and perform interpolation (in other words, perform inter-group interpolation) between obtained results of PTRS groups, to obtain a full-symbol phase noise estimation result. For another example, when an SNR and/or the MCS are/is less than or equal to a preset threshold (that is, the SNR and/or the MCS are/is low, and impact of noise on estimation precision is greater than that of the receive window advance), the network device may sequentially perform phase noise joint estimation or combined estimation on every two consecutive PTRS groups in the first PTRS pattern, and perform interpolation between obtained results of every two consecutive PTRS groups, to obtain a full-symbol phase noise estimation result. For example, joint estimation is performed on a group 1 and a group 2 to obtain a phase noise estimation value $\theta 1$, and joint estimation is performed on a group 3 and a group 4 to obtain another phase noise estimation value $\theta 2$. Then, based on $\theta 1$ and $\theta 2$, interpolation is performed to obtain a phase noise estimation value experienced by data between a center point of the group 1 and the group 2 and a center point of the group 3 and the group 4. Certainly, two full-symbol phase noise estimation results may also be obtained according to the foregoing two methods, and a result with better performance is selected as a final result.

According to the PTRS transmission method provided in this embodiment of this application, the terminal device and the network device may determine a required PTRS pattern from a PTRS pattern set in which none of all PTRS groups in each PTRS pattern is located at the tail of the OFDM symbol, so that none of all PTRS groups in the determined PTRS pattern is located at the tail of the OFDM symbol, to reduce impact of a parameter, for example, the receive window advance, on precision of phase noise estimated based on a PTRS. In this way, when the PTRS is transmitted based on the PTRS pattern, demodulation performance can be improved, and spectral efficiency can be improved.

It should be noted that PTRS transmission described above is an uplink transmission process. In a downlink transmission process, to be specific, when the network device sends the PTRS to the terminal device, and the terminal device receives the PTRS from the network device, the terminal device has the receive window advance. Different from the uplink transmission process, the terminal device needs to report the receive window advance to the network device. Another solution for determining the PTRS pattern is similar to the method in the uplink transmission process, and mutual reference may be made. Details are not described herein again.

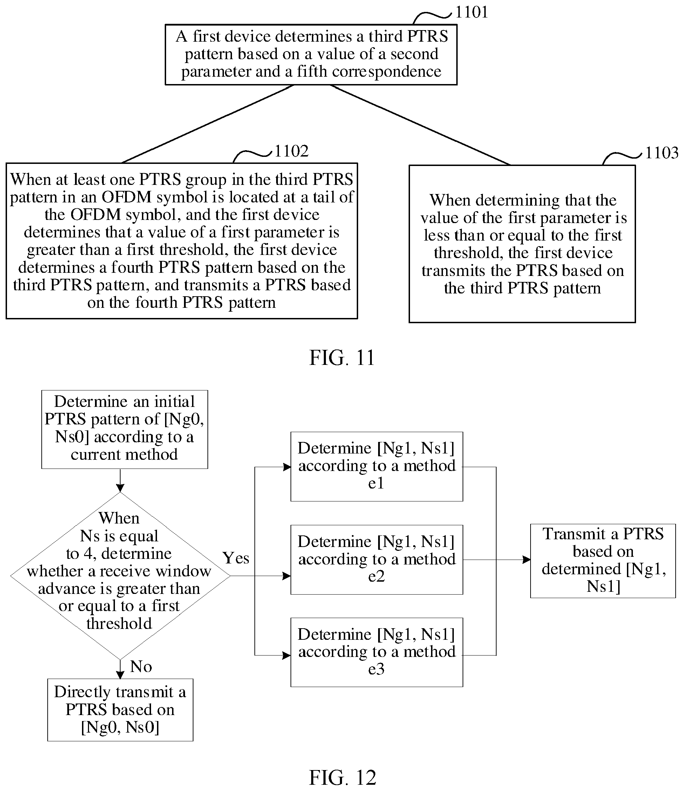

FIG. 11 shows another phase tracking reference signal transmission method according to an embodiment of this application. The method is applicable to the communication system shown in FIG. 7. Refer to FIG. 11. A specific procedure of the method may include the following steps.

Step 1101: A first device determines a third PTRS pattern based on a value of a second parameter and a fifth correspondence, where the fifth correspondence is a correspondence between a plurality of value sets of the second parameter and a plurality of PTRS patterns, and each value set corresponds to one type of PTRS pattern; the PTRS pattern indicates a distribution rule of a PTRS in an OFDM symbol; and the PTRS pattern includes a plurality of PTRS groups, and each PTRS group includes a plurality of consecutive PTRS sampling points.

The first device is a network device or a terminal device.

The second parameter is a scheduled bandwidth configured by the network device for the terminal device; or the second parameter is a scheduled bandwidth configured by the network device for the terminal device and an MCS configured by the network device for the terminal device.

Step 1102: When at least one PTRS group in the third PTRS pattern in the OFDM symbol is located at a tail of the OFDM symbol, and the first device determines that a value of a first parameter is greater than a first threshold, the first device determines a fourth PTRS pattern based on the third PTRS pattern, and transmits the PTRS based on the fourth PTRS pattern.

That at least one PTRS group in the third PTRS pattern in the OFDM symbol is located at a tail of the OFDM symbol may be specifically: at least one sampling point in at least one PTRS group in the third PTRS pattern in the OFDM symbol is located at a last sampling point or a last QAM symbol of the OFDM symbol; or a distance between at least one sampling point in at least one PTRS group in the third PTRS pattern in the OFDM symbol and a last sampling point or a last QAM symbol of the OFDM symbol is less than or equal to a preset distance threshold.

Step 1103: When determining that the value of the first parameter is less than or equal to the first threshold, the first device transmits the PTRS based on the third PTRS pattern.

Specifically, for related descriptions of the first parameter and that the value of the first parameter is greater than or equal to the first threshold, or that the value of the first parameter is less than the first threshold, refer to related descriptions in the embodiment shown in FIG. 9, and details are not described herein again.

In an optional implementation, the network device sends the value of the first parameter to the terminal device; or the network device sends seventh information to the terminal device, where the seventh information indicates whether the value of the first parameter is greater than or equal to the first threshold. In this way, the terminal device may determine, based on the information sent by the network device, whether the value of the first parameter is greater than or equal to the first threshold.

When the first device is the terminal device, that the first device transmits the PTRS based on the fourth PTRS pattern is specifically: The terminal device sends the PTRS to the network device based on the fourth PTRS pattern; or when the first device is the network device, that the first device transmits the PTRS based on the fourth PTRS pattern is specifically: The network device receives the PTRS from the terminal device based on the fourth PTRS pattern.

Similarly, when the first device is the terminal device, that the first device transmits the PTRS based on the third PTRS pattern is specifically: The terminal device sends the PTRS to the network device based on the third PTRS pattern; or when the first device is the network device, that the first device transmits the PTRS based on the third PTRS pattern is specifically: The network device receives the PTRS from the terminal device based on the third PTRS pattern.

In an optional implementation, a specific method for the first device to determine the fourth PTRS pattern based on the third PTRS pattern may be: The first device adjusts a quantity of PTRS groups in the third PTRS pattern and/or a quantity of PTRS sampling points in a PTRS group, to obtain the fourth PTRS pattern.

For example, the first device may determine the fourth PTRS pattern based on the third PTRS pattern in any one of the following three methods.

Method e1: The first device multiplies the quantity of PTRS groups in the third PTRS pattern by A, and divides a quantity of PTRS sampling points in each PTRS group in the third PTRS pattern by A, to obtain a quantity of PTRS groups in the fourth PTRS pattern and a quantity of PTRS sampling points included in each PTRS group, where A is an integer greater than or equal to 2.

Method e2: The first device increases the quantity of PTRS groups in the third PTRS pattern by B, to obtain a quantity of PTRS groups in the fourth PTRS pattern, and uses a quantity of PTRS sampling points in each PTRS group in the third PTRS pattern as a quantity of PTRS sampling points in each PTRS group in the fourth PTRS pattern, where a distribution distance between last two PTRS groups in the second PTRS pattern is greater than a second threshold, and B is an integer greater than or equal to 1.

Method e3: The first device increases the quantity of PTRS groups in the third PTRS pattern by K, to obtain a quantity of PTRS groups in the fourth PTRS pattern, keeps a quantity of PTRS sampling points in first H-2 PTRS groups to be the quantity of sampling points in the PTRS group in the third PTRS pattern and unchanged, and divides a quantity of sampling points in a last PTRS group in the third PTRS pattern by L to obtain a quantity of PTRS sampling points in last two PTRS groups, to obtain a quantity of PTRS sampling points in each PTRS group in the fourth PTRS pattern, where a distribution distance between the last two PTRS groups in the fourth PTRS pattern is greater than a third threshold, K is an integer greater than or equal to 1, L is an integer greater than or equal to 2, H is the quantity of PTRS groups in the fourth PTRS pattern, and H is a positive integer greater than 2.

Optionally, the second threshold and the third threshold each are positively correlated to the scheduled bandwidth configured by the network device for the terminal device. That is, a larger scheduled bandwidth indicates a larger second threshold and a larger third threshold.

It should be noted that, for the fourth PTRS pattern determined according to the foregoing method, when the quantity of PTRS sampling points in the PTRS group in the determined fourth PTRS pattern is 2, one PTRS group is still mapped to a middle of each of gaps whose quantity is the same as a quantity of PTRS groups obtained through division, so that there is no PTRS group at the tail of the OFDM symbol, to reduce impact of a receive window advance.

When the quantity of PTRS sampling points in the PTRS group in the determined fourth PTRS pattern is still 4, there is still one PTRS group distributed at the tail of the OFDM symbol. However, because the quantity of PTRS groups in the fourth PTRS pattern is greater than that in the third PTRS pattern, and it is ensured that the distribution distance between the last two PTRS groups is greater than a threshold, even if there is one PTRS group at the tail of the OFDM symbol, the receive window advance does not affect phase noise estimation of an entire PTRS signal.

For example, FIG. 12 is a flowchart of PTRS transmission. Specifically, the first device first determines, according to a current method (for example, a method for determining a PTRS pattern based on a current scheduled bandwidth and the correspondence between a scheduled bandwidth and a PTRS pattern shown in Table 1), an initial PTRS pattern of [Ng0, Ns0] (namely, the third PTRS pattern), and when Ns is equal to 4, determines whether the receive window advance is greater than or equal to the first threshold. If the receive window advance is greater than or equal to the first threshold, the first device determines [Ng1, N s 1] (namely, the fourth PTRS pattern) according to any one of the foregoing methods e1 to e3, and transmits the PTRS based on the determined [Ng1, Ns1]; otherwise, the first device directly transmits the PTRS based on [Ng0, Ns0]. In FIG. 12, an example in which the first parameter is the receive window advance is used as an example.

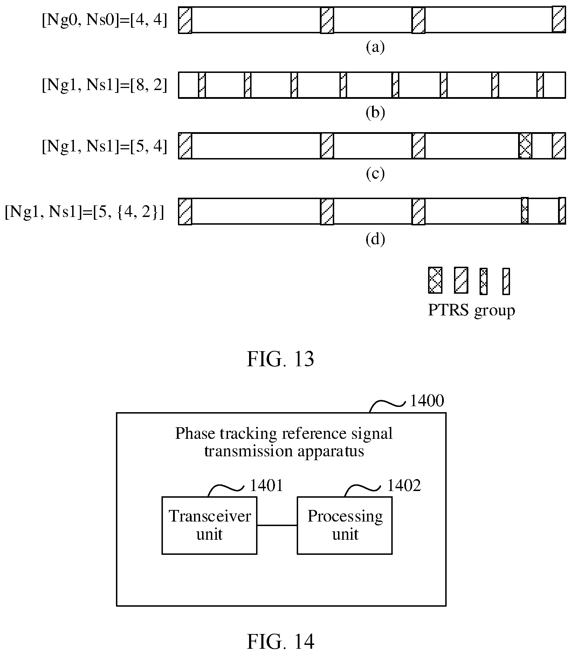

For example, that the initial PTRS pattern is [Ng0, Ns0]=[4, 4] is used as an example, and a schematic diagram of mapping is shown in (a) in FIG. 13. Processes of determining [Ng1, Ns1] according to the foregoing methods e1 to e3 are separately as follows:

In the method e1, that A is 2 is used as an example for description: [Ng1, Ns1]=[Ng0*2, Ns0/2]=[8, 2], and then the PTRS pattern is mapped according to a rule of Ns=2. A schematic diagram of mapping of a PTRS pattern of [8, 2] is shown in (b) in FIG. 13.

In the method e2, that B is 1 is used as an example for description: [Ng1, Ns1]=[Ng0+1, Ns0]=[5, 4], and one PTRS group may be added in front of a last group of an original PTRS, where a distribution distance between the newly added PTRS group and the last PTRS group is greater than the second threshold. For example, a schematic diagram of mapping of a PTRS pattern of [5, 4] is shown in (c) in FIG. 13.

In the method e3, that K is 1 and L is 2 is used as an example for description: Ng1=Ng0+1=5, in first Ng0-1=3 groups, Ns1=Ns0=4, and in last two groups, Ns1=Ns0/2=2. The last PTRS group may be split into two PTRS groups, where in first three groups, Ns1=4, and in latter two groups, Ns1=2. The last group is located at a tail of a DFT-s-OFDM symbol, and a distribution distance between a second last group and the last group is greater than the third threshold. For example, a schematic diagram of mapping of a PTRS pattern of [5, {4, 2}] is shown in (d) in FIG. 13.

It should be noted that the obtained value of [Ng1, Ns1] is merely an example, and Ns1 may alternatively be 3, or the like. This is not limited in this application.

It should be noted that the foregoing methods e1 to e3 are merely examples of methods, and there may be another method. This is not limited in this application.

Specifically, before the terminal device and the network device determine the third PTRS pattern, the terminal device may report the value set of the second parameter to the network device based on an existing procedure in the standard TR38822, for example, the five value sets of the scheduled bandwidth in Table 1. Alternatively, the network device may configure the value set of the second parameter for the terminal device based on an existing procedure in the standard TR38822, for example, the five value sets of the scheduled bandwidth in Table 1.

In an optional implementation, when the network device receives the PTRS from the terminal device based on the fourth PTRS pattern, the network device may select different phase noise estimation algorithms based on actual situations to perform phase noise estimation. For example, when a signal-to-noise ratio (signal-to-noise ratio, SNR) and/or the MCS are/is greater than a preset threshold (that is, the SNR and/or the MCS are/is high, and impact of noise on estimation precision is less than that of the receive window advance), the network device may perform phase noise estimation on each PTRS group in the fourth PTRS pattern, and perform interpolation (in other words, perform inter-group interpolation) between obtained results of PTRS groups, to obtain a full-symbol phase noise estimation result. For another example, when an SNR and/or the MCS are/is less than or equal to a preset threshold (that is, the SNR and/or the MCS are/is low, and impact of noise on estimation precision is greater than that of the receive window advance), the network device may sequentially perform phase noise joint estimation or combined estimation on every two consecutive PTRS groups in the fourth PTRS pattern, and perform interpolation between obtained results of every two consecutive PTRS groups, to obtain a full-symbol phase noise estimation result. For example, joint estimation is performed on a group 1 and a group 2 to obtain a phase noise estimation value $\theta 1$, and joint estimation is performed on a group 3 and a group 4 to obtain another phase noise estimation value $\theta 2$. Then, based on $\theta 1$ and $\theta 2$, interpolation is performed to obtain a phase noise estimation value experienced by data between a center point of the group 1 and the group 2 and a center point of the group 3 and the group 4. For another example, if the method e3 is used, phase noise joint estimation may be performed on the last two PTRS groups. If the method e2 or the method e3 is used, an estimation result of the last PTRS group may be discarded. Certainly, two full-symbol phase noise estimation results may also be obtained according to the foregoing two methods, and a result with better performance is selected as a final result.

According to the PTRS transmission method provided in this embodiment of this application, when a PTRS group in the determined PTRS pattern is located at the tail of the OFDM symbol, the terminal device and the network device can further determine a new PTRS pattern, to reduce impact of the receive window advance on PTRS phase noise estimation, ensure phase noise estimation performance of the PTRS, so that demodulation performance and spectral efficiency are improved.

It should be noted that, in the foregoing embodiment, a new PTRS pattern or a new PTRS pattern determining method is defined, so that when there is the impact of the receive window advance, none of all PTRS groups in the determined PTRS pattern is located at the tail of the OFDM symbol, to reduce the impact of the receive window advance on the PTRS phase noise estimation. It should be understood that, to achieve the foregoing objective, another method may also be used. For example, a new PTRS mapping rule may be defined for a PTRS pattern in which a quantity of sampling points in a PTRS group is 4.

For example, when a quantity of sampling points in a PTRS group in the determined PTRS pattern is 4, all PTRS groups in the PTRS pattern may be mapped to headers of gaps. Alternatively, mapping may be performed according to a mapping rule of a PTRS pattern in which a quantity of sampling points in a group is 2, that is, all PTRS groups are mapped to middles of gaps. Alternatively, a position of a last PTRS group may be moved, so that a distance between the last PTRS group in the PTRS pattern and the tail of the OFDM symbol (for example, the last sampling point or the last QAM symbol of the OFDM symbol) is greater than a preset threshold.

Based on the foregoing embodiments, an embodiment of this application further provides a phase tracking reference signal transmission apparatus. Refer to FIG. 14. The phase tracking reference signal transmission apparatus 1400 may include a transceiver unit 1401 and a processing unit 1402. The transceiver unit 1401 is used by the phase tracking reference signal transmission apparatus 1400 to transmit a PTRS, and the processing unit 1402 is configured to control and manage an action of the phase tracking reference signal transmission apparatus 1400. The processing unit 1402 may further control steps performed by the transceiver unit 1401.

For example, the phase tracking reference signal transmission apparatus 1400 may be specifically the terminal device in the foregoing embodiments, a processor in the terminal device, a chip or a chip system, a functional module, or the like. Alternatively, the phase tracking reference signal transmission apparatus 1400 may be specifically the network device in the foregoing embodiments, a processor in the network device, a chip or a chip system, a functional module, or the like.

In an embodiment, that the phase tracking reference signal transmission apparatus 1400 is configured to implement functions of the network device in the embodiment shown in FIG. 9 may specifically include the following.

The processing unit 1402 is configured to determine a first phase tracking reference signal PTRS pattern, where the first PTRS pattern belongs to a first PTRS pattern set, the first PTRS pattern set includes a plurality of PTRS patterns, and none of all PTRS groups in each PTRS pattern in an orthogonal frequency division multiplexing OFDM symbol is located at a tail of the OFDM symbol; the PTRS pattern indicates a distribution rule of a PTRS in the OFDM symbol; and the PTRS pattern includes a plurality of PTRS groups, and each PTRS group includes a plurality of consecutive PTRS sampling points. The transceiver unit 1401 is configured to: transmit the PTRS based on the first PTRS pattern, in other words, receive the PTRS based on the first PTRS pattern.

In an optional implementation, when determining the first PTRS pattern, the processing unit 1402 is specifically configured to: determine that a value of a first parameter is greater than or equal to a first threshold, where the first parameter includes a receive window advance; and determine the first PTRS pattern based on a value of a second parameter and a first correspondence, where the first correspondence is a correspondence between a plurality of value sets of the second parameter and a plurality of PTRS patterns, each value set corresponds to one type of PTRS pattern, and the plurality of PTRS patterns in the first correspondence are the same as the plurality of PTRS patterns included in the first PTRS pattern set.

In an optional implementation, the transceiver unit 1401 is further configured to: before the processing unit 1402 determines the first PTRS pattern, receive first information from the terminal device, where the first information indicates a value set of the second parameter in a recommended second correspondence, a quantity of value sets of the second parameter is greater than 5, the second correspondence is a correspondence between a plurality of value sets of the second parameter and a plurality of PTRS patterns, and the plurality of PTRS patterns in the second correspondence include the first PTRS pattern set.

In an example, the transceiver unit 1401 is further configured to: before the processing unit 1402 determines the first PTRS pattern, send second information to the terminal device, where the second information indicates the value set of the second parameter in the second correspondence, the quantity of value sets of the second parameter is greater than 5, the second correspondence is the correspondence between a plurality of value sets of the second parameter and a plurality of PTRS patterns, and the plurality of PTRS patterns in the second correspondence include the first PTRS pattern set.

In another example, the transceiver unit 1401 is further configured to: before the processing unit 1402 determines the first PTRS pattern, send third information to the terminal device, where the third information indicates a plurality of groups of value sets of the second parameter, and a quantity of value sets of the second parameter in each group is greater than 5.

Further, the transceiver unit 1401 is further configured to: send fourth information to the terminal device, where the fourth information indicates a group of value sets of the second parameter, the group of value sets of the second parameter is one of the plurality of groups of value sets of the second parameter, and the group of value sets of the second parameter includes the value sets of the second parameter in the first correspondence.

Optionally, the processing unit 1402 is further configured to: send the value of the first parameter to the terminal device; send fifth information to the terminal device, where when the fifth information is a first value, the fifth information indicates whether the value of the first parameter is greater than or equal to the first threshold; or send sixth information to the terminal device, where the sixth information indicates the first correspondence.

In another embodiment, that the phase tracking reference signal transmission apparatus 1400 is configured to implement functions of the terminal device in the embodiment shown in FIG. 9 may specifically include the following.

The processing unit 1402 is configured to determine a first phase tracking reference signal PTRS pattern, where the first PTRS pattern belongs to a first PTRS pattern set, the first PTRS pattern set includes a plurality of PTRS patterns, and none of all PTRS groups in each PTRS pattern in an orthogonal frequency division multiplexing OFDM symbol is located at a tail of the OFDM symbol; the PTRS pattern indicates a distribution rule of a PTRS in the OFDM symbol; and the PTRS pattern includes a plurality of PTRS groups, and each PTRS group includes a plurality of consecutive PTRS sampling points. The transceiver unit 1401 is configured to: transmit the PTRS based on the first PTRS pattern, in other words, send the PTRS based on the first PTRS pattern.

In an optional implementation, when determining the first PTRS pattern, the processing unit 1402 is specifically configured to: determine a correspondence between a value set of a second parameter and a PTRS pattern as a first correspondence, where the first correspondence is a correspondence between a plurality of value sets of the second parameter and a plurality of PTRS patterns, each value set corresponds to one type of PTRS pattern, and the plurality of PTRS patterns in the first correspondence are the same as the plurality of PTRS patterns included in the first PTRS pattern set; and determine the first PTRS pattern based on a value of the second parameter and the first correspondence.

In an optional implementation, the transceiver unit 1401 is further configured to: receive a value of a first parameter from the network device; receive fifth information from the network device, where when the fifth information is a first value, the fifth information indicates whether the value of the first parameter is greater than or equal to a first threshold; or receive sixth information from the network device, where the sixth information indicates that the correspondence between a value set of a second parameter and a PTRS pattern is the first correspondence.

For example, when determining the correspondence between a value set of a second parameter and a PTRS pattern as the first correspondence, the processing unit 1402 is specifically configured to: after the transceiver unit 1401 receives the value of the first parameter from the network device, and it is determined that the value of the first parameter is greater than or equal to the first threshold, determine the correspondence between a value set of a second parameter and a PTRS pattern as the first correspondence, where the first parameter includes a receive window advance; if the fifth information is the first value, and the fifth information indicates that the value of the first parameter is greater than or equal to the first threshold, determine the correspondence between a value set of a second parameter and a PTRS pattern as the first correspondence; or determine, based on the sixth information, the correspondence between a value set of a second parameter and a PTRS pattern as the first correspondence.

Optionally, the transceiver unit 1401 is further configured to: before the processing unit 1402 determines the correspondence between a value set of a second parameter and a PTRS pattern as the first correspondence, send first information to the network device, where the first information indicates a value set of the second parameter in a recommended second correspondence, a quantity of value sets of the second parameter is greater than 5, the second correspondence is a correspondence between a plurality of value sets of the second parameter and a plurality of PTRS patterns, and the plurality of PTRS patterns in the second correspondence include the first PTRS pattern set.

In an example, the transceiver unit 1401 is further configured to: before the processing unit 1402 determines the correspondence between a value set of a second parameter and a PTRS pattern as the first correspondence, receive second information from the network device, where the second information indicates the value set of the second parameter in the second correspondence, the quantity of value sets of the second parameter is greater than 5, the second correspondence is the correspondence between a plurality of value sets of the second parameter and a plurality of PTRS patterns, and the plurality of PTRS patterns in the second correspondence include the first PTRS pattern set. When determining the correspondence between a value set of a second parameter and a PTRS pattern as the first correspondence, the processing unit 1402 is specifically configured to: determine, based on the value set that is of the second parameter and that is indicated by the second information, the correspondence between a value set of a second parameter and a PTRS pattern as the first correspondence.

In another example, the transceiver unit 1401 is further configured to: before the processing unit 1402 determines the correspondence between a value set of a second parameter and a PTRS pattern as the first correspondence, receive third information from the network device, where the third information indicates a plurality of groups of value sets of the second parameter, and a quantity of value sets of the second parameter in each group is greater than 5.

Further, the transceiver unit 1401 is further configured to: before the processing unit 1402 determines the correspondence between a value set of a second parameter and a PTRS pattern as the first correspondence, receive fourth information from the network device, where the fourth information indicates a group of value sets of the second parameter, the group of value sets of the second parameter is one of the plurality of groups of value sets of the second parameter, and the group of value sets of the second parameter includes the value sets of the second parameter in the first correspondence. When determining the correspondence between a value set of a second parameter and a PTRS pattern as the first correspondence, the processing unit 1402 is specifically configured to: determine, based on the group of value sets that is of the second parameter and that is indicated by the fourth information, the correspondence between a value set of a second parameter and a PTRS pattern as the first correspondence.

Specifically, the following descriptions are applicable to both the foregoing two embodiments.

Specifically, that none of all PTRS groups in each PTRS pattern in an orthogonal frequency division multiplexing OFDM symbol is located at a tail of the OFDM symbol includes: no sampling point in a last PTRS group in each PTRS pattern in the OFDM symbol is located at a last sampling point or a last modulation symbol of the OFDM symbol; or a distance between any sampling point in a last PTRS group in each PTRS pattern in the OFDM symbol and a last sampling point or a last modulation symbol of the OFDM symbol is greater than a preset distance threshold.

For example, a quantity of PTRS sampling points in a PTRS group in any one of the plurality of PTRS patterns is not equal to 4.

Optionally, the second parameter is a scheduled bandwidth configured by the network device for the terminal device; or the second parameter is a scheduled bandwidth configured by the network device for the terminal device and a modulation and coding scheme MCS configured by the network device for the terminal device.

In an example, the first parameter further includes a modulation and coding scheme MCS configured by the network device for the terminal device.

In another example, when determining that the value of the first parameter is greater than or equal to the first threshold, the processing unit 1402 is specifically configured to: determine that a value of a receive window advance corresponding to a first modulation and coding scheme MCS is greater than or equal to the first threshold, where the first MCS is one of a plurality of MCSs configured by the network device for the terminal device, and thresholds of values of receive window advances corresponding to the plurality of MCSs are different.

Optionally, the plurality of PTRS patterns in the second correspondence include a plurality of PTRS patterns in a third correspondence, and the value set of the second parameter in the first correspondence is different from a value set of the second parameter in the third correspondence.

For example, the value set of the second parameter in the first correspondence is the same as a value set of the second parameter in a fourth correspondence, and at least one of the plurality of PTRS patterns in the first correspondence is different from at least one of a plurality of PTRS patterns in the fourth correspondence; and the fourth correspondence is a correspondence between a plurality of value sets of the second parameter and a plurality of PTRS patterns, and the fourth correspondence is a correspondence used when the value of the first parameter is less than the first threshold.

In still another embodiment, that the phase tracking reference signal transmission apparatus 1400 is configured to implement functions of the network device in the embodiment shown in FIG. 11 may specifically include the following.

The processing unit 1402 is configured to: determine a third PTRS pattern based on a value of a second parameter and a fifth correspondence, where the fifth correspondence is a correspondence between a plurality of value sets of the second parameter and a plurality of PTRS patterns, each value set corresponds to one type of PTRS pattern, the PTRS pattern indicates a distribution rule of a PTRS in an orthogonal frequency division multiplexing OFDM symbol, the PTRS pattern includes a plurality of PTRS groups, and each PTRS group includes a plurality of consecutive PTRS sampling points; and when at least one PTRS group in the third PTRS pattern in the OFDM symbol is located at a tail of the OFDM symbol, and it is determined that a value of a first parameter is greater than or equal to a first threshold, determine a fourth PTRS pattern based on the third PTRS pattern. The transceiver unit 1401 is configured to: transmit the PTRS based on the fourth PTRS pattern, in other words, transmit the PTRS and receive the PTRS based on the fourth PTRS pattern, where the first parameter includes a receive window advance.

In an optional implementation, the transceiver unit 1401 is further configured to: send the value of the first parameter to the terminal device; or send seventh information to the terminal device, where the seventh information indicates whether the value of the first parameter is greater than or equal to the first threshold.

In an optional implementation, the processing unit 1402 is further configured to determine that the value of the first parameter is less than the first threshold. The transceiver unit 1401 is further configured to: when the processing unit 1402 determines that the value of the first parameter is less than the first threshold, transmit (in other words, receive) the PTRS based on the third PTRS pattern.

In still another embodiment, that the phase tracking reference signal transmission apparatus 1400 is configured to implement functions of the terminal device in the embodiment shown in FIG. 11 may specifically include the following.

The processing unit 1402 is configured to: determine a third PTRS pattern based on a value of a second parameter and a fifth correspondence, where the fifth correspondence is a correspondence between a plurality of value sets of the second parameter and a plurality of PTRS patterns, each value set corresponds to one type of PTRS pattern, the PTRS pattern indicates a distribution rule of a PTRS in an orthogonal frequency division multiplexing OFDM symbol, the PTRS pattern includes a plurality of PTRS groups, and each PTRS group includes a plurality of consecutive PTRS sampling points; and when at least one PTRS group in the third PTRS pattern in the OFDM symbol is located at a tail of the OFDM symbol, and it is determined that a value of a first parameter is greater than or equal to a first threshold, determine a fourth PTRS pattern based on the third PTRS pattern. The transceiver unit 1401 is configured to: transmit the PTRS based on the fourth PTRS pattern, in other words, transmit the PTRS and send the PTRS based on the fourth PTRS pattern, where the first parameter includes a receive window advance.

In an optional implementation, the transceiver unit 1401 is further configured to: receive the value of the first parameter from the network device; or receive and send seventh information from the network device, where the seventh information indicates whether the value of the first parameter is greater than or equal to the first threshold.

In an optional implementation, the processing unit 1402 is further configured to determine that the value of the first parameter is less than the first threshold. The transceiver unit 1401 is further configured to: when the processing unit 1402 determines that the value of the first parameter is less than the first threshold, transmit (in other words, send) the PTRS based on the third PTRS pattern.

Specifically, the following descriptions are applicable to both the foregoing two embodiments.

In an optional implementation, when determining the fourth PTRS pattern based on the third PTRS pattern, the processing unit 1402 is specifically configured to: adjust a quantity of PTRS groups in the third PTRS pattern and/or a quantity of PTRS sampling points in a PTRS group, to obtain the fourth PTRS pattern.

For example, when determining the fourth PTRS pattern based on the third PTRS pattern, the processing unit 1402 is specifically configured to: multiply the quantity of PTRS groups in the third PTRS pattern by A, and divide a quantity of PTRS sampling points in each PTRS group in the third PTRS pattern by A, to obtain a quantity of PTRS groups in the fourth PTRS pattern and a quantity of PTRS sampling points included in each PTRS group, where A is an integer greater than or equal to 2; increase the quantity of PTRS groups in the third PTRS pattern by B, to obtain a quantity of PTRS groups in the fourth PTRS pattern, and use a quantity of PTRS sampling points in each PTRS group in the third PTRS pattern as a quantity of PTRS sampling points in each PTRS group in the fourth PTRS pattern, where a distribution distance between last two PTRS groups in the fourth PTRS pattern is greater than a second threshold, and B is an integer greater than or equal to 1; or increase the quantity of PTRS groups in the third PTRS pattern by K, to obtain a quantity of PTRS groups in the fourth PTRS pattern, keep a quantity of PTRS sampling points in first H-2 PTRS groups to be the quantity of PTRS sampling points in the PTRS group in the third PTRS pattern and unchanged, and divide a quantity of sampling points in a last PTRS group in the third PTRS pattern by L to obtain a quantity of PTRS sampling points in last two PTRS groups, to obtain a quantity of PTRS sampling points in each PTRS group in the fourth PTRS pattern, where a distribution distance between the last two PTRS groups in the fourth PTRS pattern is greater than a third threshold, K is an integer greater than or equal to 1, L is an integer greater than or equal to 2, H is the quantity of PTRS groups in the fourth PTRS pattern, and H is a positive integer greater than 2.

Optionally, the second threshold and the third threshold each are positively correlated to a scheduled bandwidth configured by the network device for the terminal device.

Specifically, the second parameter is the scheduled bandwidth configured by the network device for the terminal device; or the second parameter is the scheduled bandwidth configured by the network device for the terminal device and a modulation and coding scheme MCS configured by the network device for the terminal device.

In an example, the first parameter further includes a modulation and coding scheme MCS configured by the network device for the terminal device.

In another example, when determining that the value of the first parameter is greater than or equal to the first threshold, the processing unit 1402 is specifically configured to: determine that a value of a receive window advance corresponding to a first modulation and coding scheme MCS is greater than or equal to the first threshold, where the first MCS is one of a plurality of MCSs configured by the network device for the terminal device, and thresholds of values of receive window advances corresponding to the plurality of MCSs are different.

For example, that at least one PTRS group in the first PTRS pattern in the OFDM symbol is located at a tail of the OFDM symbol includes: at least one sampling point in at least one PTRS group in the first PTRS pattern in the OFDM symbol is located at a last sampling point or a last modulation symbol of the OFDM symbol; or a distance between at least one sampling point in at least one PTRS group in the first PTRS pattern in the OFDM symbol and a last sampling point or a last modulation symbol of the OFDM symbol is less than or equal to a preset distance threshold.

It should be noted that, in embodiments of this application, division into the units is an example, and is merely logical function division. During actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software function unit and sold or used as an independent product, the integrated unit may be stored in a computer-readable storage medium. Based on such an understanding, the technical solutions in this application essentially, or the part contributing to a conventional technology, or all or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

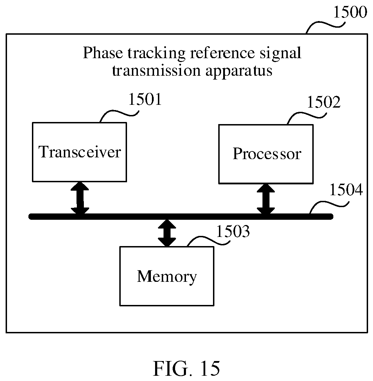

Based on the foregoing embodiments, an embodiment of this application further provides a phase tracking reference signal transmission apparatus. Refer to FIG. 15. The phase tracking reference signal transmission apparatus 1500 may include a transceiver 1501 and a processor 1502. Optionally, the phase tracking reference signal transmission apparatus 1500 may further include a memory 1503. The memory 1503 may be disposed inside the phase tracking reference signal transmission apparatus 1500, or may be disposed outside the phase tracking reference signal transmission apparatus 1500. The processor 1502 may control the transceiver 1501 to receive and send information, a signal, data, or the like.

Specifically, the processor 1502 may be a central processing unit (central processing unit, CPU), a network processor (network processor, NP), or a combination of the CPU and the NP. The processor 1502 may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof.

The transceiver 1501, the processor 1502, and the memory 1503 are connected to each other. Optionally, the transceiver 1501, the processor 1502, and the memory 1503 are connected to each other through a bus 1504. The bus 1504 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used in FIG. 15 for representation, but it does not indicate that there is only one bus or only one type of bus.

In an optional implementation, the memory 1503 is configured to store a program and the like. Specifically, the program may include program code, and the program code includes computer operation instructions. The memory 1503 may include a RAM, or may further include a non-volatile memory (non-volatile memory), for example, one or more magnetic disk memories. The processor 1502 executes the application program stored in the memory 1503 to implement the foregoing functions, to implement the functions of the phase tracking reference signal transmission apparatus 1500.

For example, the phase tracking reference signal transmission apparatus 1500 may be the terminal device in the foregoing embodiments, or may be the network device in the foregoing embodiments.

In an embodiment, when the phase tracking reference signal transmission apparatus 1500 implements a function of the terminal device in the embodiment shown in FIG. 9, the transceiver 1501 may implement sending and receiving operations performed by the terminal device in the embodiment shown in FIG. 9; and the processor 1502 may implement an operation performed by the terminal device in the embodiment shown in FIG. 9 other than the sending and receiving operations. For specific related descriptions, refer to the related descriptions in the embodiment shown in FIG. 9. Details are not described herein again.

In another embodiment, when the phase tracking reference signal transmission apparatus 1500 implements a function of the network device in the embodiment shown in FIG. 9, the transceiver 1501 may implement sending and receiving operations performed by the network device in the embodiment shown in FIG. 9; and the processor 1502 may implement an operation performed by the network device in the embodiment shown in FIG. 9 other than the sending and receiving operations. For specific related descriptions, refer to the related descriptions in the embodiment shown in FIG. 9. Details are not described herein again.

In still another embodiment, when the phase tracking reference signal transmission apparatus 1500 implements a function of the terminal device in the embodiment shown in FIG. 11, the transceiver 1501 may implement sending and receiving operations performed by the terminal device in the embodiment shown in FIG. 11; and the processor 1502 may implement an operation performed by the terminal device in the embodiment shown in FIG. 11 other than the sending and receiving operations. For specific related descriptions, refer to the related descriptions in the embodiment shown in FIG. 11. Details are not described herein again.

In still another embodiment, when the phase tracking reference signal transmission apparatus 1500 implements a function of the network device in the embodiment shown in FIG. 11, the transceiver 1501 may implement sending and receiving operations performed by the network device in the embodiment shown in FIG. 11; and the processor 1502 may implement an operation performed by the network device in the embodiment shown in FIG. 11 other than the sending and receiving operations. For specific related descriptions, refer to the related descriptions in the embodiment shown in FIG. 11. Details are not described herein again.

Based on the foregoing embodiments, an embodiment of this application provides a communication system. The communication system may include the terminal device, the network device, and the like in the foregoing embodiments.

An embodiment of this application further provides a computer-readable storage medium. The computer-readable storage medium is configured to store a computer program. When the computer program is executed by a computer, the computer can implement the phase tracking reference signal transmission method provided in the foregoing method embodiments.

An embodiment of this application further provides a computer program product. The computer program product is configured to store a computer program. When the computer program is executed by a computer, the computer can implement the phase tracking reference signal transmission method provided in the foregoing method embodiments.

An embodiment of this application further provides a chip, including a processor. The processor is coupled to a memory, and is configured to invoke a program in the memory, so that the chip implements the phase tracking reference signal transmission method provided in the foregoing method embodiments.

An embodiment of this application further provides a chip, where the chip is coupled to a memory, and the chip is configured to implement the phase tracking reference signal transmission method provided in the foregoing method embodiments.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or another programmable data processing device, so that a series of operations and steps are performed on the computer or another programmable device, to generate computer-implemented processing. Therefore, the instructions executed on the computer or another programmable device provide steps for implementing a specified function in one or more processes in the flowcharts and/or in one or more blocks in the block diagrams.

It is clear that a person skilled in the art can make various modifications and variations to this application without departing from the scope of this application. Therefore, this application is intended to cover these modifications and variations of this application provided that they fall within the scope of the claims of this application and their equivalent technologies.

## Claims

1. A phase tracking reference signal transmission method, comprising:

   determining a first phase tracking reference signal PTRS pattern, wherein the first PTRS pattern belongs to a first PTRS pattern set, the first PTRS pattern set comprises a plurality of PTRS patterns, and none of all PTRS groups in each PTRS pattern in an orthogonal frequency division multiplexing OFDM symbol is located at a tail of the OFDM symbol; the PTRS pattern indicates a distribution rule of a PTRS in the OFDM symbol; and the PTRS pattern comprises a plurality of PTRS groups, and each PTRS group comprises a plurality of consecutive PTRS sampling points; and

transmitting the PTRS based on the first PTRS pattern.

2. The method according to claim 1, wherein that none of all PTRS groups in each PTRS pattern in an OFDM symbol is located at a tail of the OFDM symbol comprises:

no sampling point in a last PTRS group in each PTRS pattern in the OFDM symbol is located at a last sampling point or a last modulation symbol of the OFDM symbol; or

a distance between any sampling point in a last PTRS group in each PTRS pattern in the OFDM symbol and a last sampling point or a last modulation symbol of the OFDM symbol is greater than a preset distance threshold.

3. The method according to claim 1 or 2, wherein a quantity of PTRS sampling points in a PTRS group in any one of the plurality of PTRS patterns is not equal to 4.

4. The method according to any one of claims 1 to 3, wherein the determining a first PTRS pattern comprises:

determining that a value of a first parameter is greater than or equal to a first threshold, wherein the first parameter comprises a receive window advance; and

determining the first PTRS pattern based on a value of a second parameter and a first correspondence, wherein the first correspondence is a correspondence between a plurality of value sets of the second parameter and a plurality of PTRS patterns, each value set corresponds to one type of PTRS pattern, and the plurality of PTRS patterns in the first correspondence are the same as the plurality of PTRS patterns comprised in the first PTRS pattern set.

5. The method according to claim 4, wherein before the determining a first PTRS pattern, the method further comprises: receiving first information from a terminal device, wherein the first information indicates a value set of the second parameter in a recommended second correspondence, a quantity of value sets of the second parameter is greater than 5, the second correspondence is a correspondence between a plurality of value sets of the second parameter and a plurality of PTRS patterns, and the plurality of PTRS patterns in the second correspondence comprise the first PTRS pattern set.

6. The method according to claim 4 or 5, wherein before the determining a first PTRS pattern, the method further comprises:

sending second information to the terminal device, wherein the second information indicates the value set of the second parameter in the second correspondence, the quantity of value sets of the second parameter is greater than 5, the second correspondence is the correspondence between a plurality of value sets of the second parameter and a plurality of PTRS patterns, and the plurality of PTRS patterns in the second correspondence comprise the first PTRS pattern set.

7. The method according to any one of claims 4 to 6, wherein before the determining a first PTRS pattern, the method further comprises:

sending third information to the terminal device, wherein the third information indicates a plurality of groups of value sets of the second parameter, and a quantity of value sets of the second parameter in each group is greater than 5.

8. The method according to claim 7, wherein the method further comprises:

sending fourth information to the terminal device, wherein the fourth information indicates a group of value sets of the second parameter, the group of value sets of the second parameter is one of the plurality of groups of value sets of the second parameter, and the group of value sets of the second parameter comprises the value sets of the second parameter in the first correspondence.

9. The method according to any one of claims 4 to 8, wherein the method further comprises:

sending the value of the first parameter to the terminal device;

sending fifth information to the terminal device, wherein when the fifth information is a first value, the fifth information indicates whether the value of the first parameter is greater than or equal to the first threshold; or

sending sixth information to the terminal device, wherein the sixth information indicates the first correspondence.

10. The method according to any one of claims 1 to 3, wherein the determining a first PTRS pattern comprises:

determining a correspondence between a value set of a second parameter and a PTRS pattern as a first correspondence, wherein the first correspondence is a correspondence between a plurality of value sets of the second parameter and a plurality of PTRS patterns, each value set corresponds to one type of PTRS pattern, and the plurality of PTRS patterns in the first correspondence are the same as the plurality of PTRS patterns comprised in the first PTRS pattern set; and

determining the first PTRS pattern based on a value of the second parameter and the first correspondence.

11. The method according to claim 10, wherein the determining a correspondence between a value set of a second parameter and a PTRS pattern as a first correspondence comprises:

receiving a value of a first parameter from a network device, and if it is determined that the value of the first parameter is greater than or equal to a first threshold, determining the correspondence between a value set of a second parameter and a PTRS pattern as the first correspondence, wherein the first parameter comprises a receive window advance;

receiving fifth information from a network device, wherein when the fifth information is a first value, the fifth information indicates whether a value of a first parameter is greater than or equal to a first threshold; and if the fifth information is the first value, and it is determined that the value of the first parameter is greater than or equal to the first threshold, determining the correspondence between a value set of a second parameter and a PTRS pattern as the first correspondence; or

receiving sixth information from a network device, wherein the sixth information indicates that the correspondence between a value set of a second parameter and a PTRS pattern is the first correspondence.

12. The method according to claim 10, wherein before the determining a correspondence between a value set of a second parameter and a PTRS pattern as a first correspondence, the method further comprises:

sending first information to a network device, wherein the first information indicates a value set of the second parameter in a recommended second correspondence, a quantity of value sets of the second parameter is greater than 5, the second correspondence is a correspondence between a plurality of value sets of the second parameter and a plurality of PTRS patterns, and the plurality of PTRS patterns in the second correspondence comprise the first PTRS pattern set.

13. The method according to claim 10 or 12, wherein before the determining a correspondence between a value set of a second parameter and a PTRS pattern as a first correspondence, the method further comprises:

receiving second information from the network device, wherein the second information indicates the value set of the second parameter in the second correspondence, the quantity of value sets of the second parameter is greater than 5, the second correspondence is the correspondence between a plurality of value sets of the second parameter and a plurality of PTRS patterns, and the plurality of PTRS patterns in the second correspondence comprise the first PTRS pattern set; and

the determining a correspondence between a value set of a second parameter and a PTRS pattern as a first correspondence comprises:

determining, based on the value set that is of the second parameter and that is indicated by the second information, the correspondence between a value set of a second parameter and a PTRS pattern as the first correspondence.

14. The method according to claim 10 or 12, wherein before the determining a correspondence between a value set of a second parameter and a PTRS pattern as a first correspondence, the method further comprises:

receiving third information from the network device, wherein the third information indicates a plurality of groups of value sets of the second parameter, and a quantity of value sets of the second parameter in each group is greater than 5.

15. The method according to claim 14, wherein before the determining a correspondence between a value set of a second parameter and a PTRS pattern as a first correspondence, the method further comprises:

receiving fourth information from the network device, wherein the fourth information indicates a group of value sets of the second parameter, the group of value sets of the second parameter is one of the plurality of groups of value sets of the second parameter, and the group of value sets of the second parameter comprises the value sets of the second parameter in the first correspondence; and

the determining a correspondence between a value set of a second parameter and a PTRS pattern as a first correspondence comprises:

determining, based on the group of value sets that is of the second parameter and that is indicated by the fourth information, the correspondence between a value set of a second parameter and a PTRS pattern as the first correspondence.

16. The method according to any one of claims 4 to 15, wherein the second parameter is a scheduled bandwidth configured by the network device for the terminal device; or the second parameter is a scheduled bandwidth configured by the network device for the terminal device and a modulation and coding scheme MCS configured by the network device for the terminal device.

17. The method according to any one of claims 4 to 9 and 11, wherein the first parameter further comprises a modulation and coding scheme MCS configured by the network device for the terminal device.

18. The method according to any one of claims 4 to 9 and 11, wherein the determining that a value of a first parameter is greater than or equal to a first threshold comprises:

determining that a value of a receive window advance corresponding to a first modulation and coding scheme MCS is greater than or equal to the first threshold, wherein the first MCS is one of a plurality of MCSs configured by the network device for the terminal device, and thresholds of values of receive window advances corresponding to the plurality of MCSs are different.

19. The method according to any one of claims 5, 6, 12 and 13, wherein the plurality of PTRS patterns in the second correspondence comprise a plurality of PTRS patterns in a third correspondence, and the value set of the second parameter in the first correspondence is different from a value set of the second parameter in the third correspondence.

20. The method according to any one of claims 4, 10 and 11, wherein the value set of the second parameter in the first correspondence is the same as a value set of the second parameter in a fourth correspondence, and at least one of the plurality of PTRS patterns in the first correspondence is different from at least one of a plurality of PTRS patterns in the fourth correspondence; and

the fourth correspondence is a correspondence between a plurality of value sets of the second parameter and a plurality of PTRS patterns, and the fourth correspondence is a correspondence used when the value of the first parameter is less than the first threshold.

21. A phase tracking reference signal transmission apparatus, comprising a transceiver and a processor, wherein

the transceiver is configured to: transmit a phase tracking reference signal PTRS, or receive or send information; and

the processor is coupled to a memory, and is configured to: invoke computer instructions in the memory, to enable the phase tracking reference signal transmission apparatus to perform the method according to any one of claims 1 to 20.

22. A computer-readable storage medium, wherein the computer-readable storage medium stores computer-executable instructions, and when being invoked by a computer, the computer-executable instructions are used to enable the computer to perform the method according to any one of claims 1 to 20.

23. A computer program product comprising instructions, wherein when the computer program product runs on a computer, the computer is enabled to perform the method according to any one of claims 1 to 20.

24. A chip, wherein the chip is coupled to a memory, and is configured to: read and execute program instructions stored in the memory, to implement the method according to any one of claims 1 to 20.

FIG. 1

FIG. 2

FIG. 3

FIG. 4

FIG. 5

TX

CP          Output window

RX

Input window

N=2

Advancing of
a receive
window

TX

CP          Output window

RX

PTRS
group

Input window

N=4

Advancing of
a receive
window

TX

CP          Output window

RX

Input window

N=8

Advancing of
a receive
window

FIG. 6

Network device

Network device

Network device

Terminal
device

Terminal
device

Terminal
device

Terminal
device

Terminal
device

Terminal
device

Terminal
device

Terminal
device

② ② ① ① ③

→ eMBB

− − − ► Multi-site transmission

− · − · − · − ► Backhaul

− − − − ► D2D

FIG. 7

FIG. 8

FIG. 9

| Network device | | Terminal device |
|---|---|---|

First information

Second information

Value of a second parameter

Determine a PTRS pattern based on a configured value set of the second parameter, a corresponding PTRS pattern set, and the value of the second parameter

Send a PTRS based on the determined PTRS pattern

Determine the PTRS pattern based on the configured value set of the second parameter, the corresponding PTRS pattern set, and the value of the second parameter, receive the PTRS based on the determined PTRS pattern, and perform phase noise estimation and compensation

Second information

Value of the second parameter

Determine a PTRS pattern based on a configured value set of the second parameter, a corresponding PTRS pattern set, and the value of the second parameter

Send a PTRS based on the determined PTRS pattern

Determine the PTRS pattern based on the configured value set of the second parameter, the corresponding PTRS pattern set, and the value of the second parameter, receive the PTRS based on the determined PTRS pattern, and perform phase noise estimation and compensation

FIG. 10a

| Network device | | Terminal device |
|---|---|---|

First information

Third information

Fourth information

Value of a second parameter

Determine a PTRS pattern based on a configured value set of the second parameter, a corresponding PTRS pattern set, and the value of the second parameter

Send a PTRS based on the determined PTRS pattern

Determine the PTRS pattern based on the configured value set of the second parameter, the corresponding PTRS pattern set, and the value of the second parameter, receive the PTRS based on the determined PTRS pattern, and perform phase noise estimation and compensation

Fourth information

Value of the second parameter

Determine a PTRS pattern based on a configured value set of the second parameter, a corresponding PTRS pattern set, and the value of the second parameter

Send a PTRS based on the determined PTRS pattern

Determine the PTRS pattern based on the configured value set of the second parameter, the corresponding PTRS pattern set, and the value of the second parameter, receive the PTRS based on the determined PTRS pattern, and perform phase noise estimation and compensation

FIG. 10b

~1101

A first device determines a third PTRS pattern based on a value of a second parameter and a fifth correspondence

~1102

When at least one PTRS group in the third PTRS pattern in an OFDM symbol is located at a tail of the OFDM symbol, and the first device determines that a value of a first parameter is greater than a first threshold, the first device determines a fourth PTRS pattern based on the third PTRS pattern, and transmits a PTRS based on the fourth PTRS pattern

~1103

When determining that the value of the first parameter is less than or equal to the first threshold, the first device transmits the PTRS based on the third PTRS pattern

FIG. 11

Determine an initial PTRS pattern of [Ng0, Ns0] according to a current method

When Ns is equal to 4, determine whether a receive window advance is greater than or equal to a first threshold

Yes

Determine [Ng1, Ns1] according to a method e1

Determine [Ng1, Ns1] according to a method e2

Determine [Ng1, Ns1] according to a method e3

No

Directly transmit a PTRS based on [Ng0, Ns0]

Transmit a PTRS based on determined [Ng1, Ns1]

FIG. 12

[Ng0, Ns0]=[4, 4]

(a)

[Ng1, Ns1]=[8, 2]

(b)

[Ng1, Ns1]=[5, 4]

(c)

[Ng1, Ns1]=[5, {4, 2}]

(d)

PTRS group

FIG. 13

1400

Phase tracking reference signal
transmission apparatus

1401

Transceiver
unit

1402

Processing
unit

FIG. 14

EP 4 373 044 A1

FIG. 15

## INTERNATIONAL SEARCH REPORT

| International application No. |
| --- |
| **PCT/CN2022/110063** |

**A. CLASSIFICATION OF SUBJECT MATTER**

H04L 27/26(2006.01)i; H04L 5/00(2006.01)i

According to International Patent Classification (IPC) or to both national classification and IPC

**B. FIELDS SEARCHED**

Minimum documentation searched (classification system followed by classification symbols)

H04L, H04W

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: PTRS, PT-RS, pattern, symbol, sample, location, position, group, chunk, tail, last, QAM, modulat+, window, timing, advance, shift, 相位跟踪参考信号, 模式, 图案, 符号, 采样, 位置, 组, 块, 尾, 最后, 调制, 窗, 定时, 移位, 偏移, 提前

**C. DOCUMENTS CONSIDERED TO BE RELEVANT**

| Category* | Citation of document, with indication, where appropriate, of the relevant passages | Relevant to claim No. |
| --- | --- | --- |
| Y | CN 108809598 A (HUAWEI TECHNOLOGIES CO., LTD.) 13 November 2018 (2018-11-13) description, paragraphs 142-355 | 1-24 |
| Y | VIVO. "Discussion summary #3 of [104b-e-NR-52-71GHz-05]" *3GPP TSG RAN WG1 Meeting #104bis-e, R1-2104041*, 20 April 2021 (2021-04-20), section 2.3 | 1-24 |
| Y | HUAWEI et al. "Remaining issues of PTRS" *3GPP TSG RAN WG1 Meeting #91, R1-1719440*, 01 December 2017 (2017-12-01), section 3.2 | 1-24 |
| A | CN 110024322 A (IDAC HOLDINGS, INC.) 16 July 2019 (2019-07-16) entire document | 1-24 |
| A | CN 112654089 A (HUAWEI TECHNOLOGIES CO., LTD.) 13 April 2021 (2021-04-13) entire document | 1-24 |
| A | CN 111357233 A (SAMSUNG ELECTRONICS CO., LTD.) 30 June 2020 (2020-06-30) entire document | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 October 2022** | **26 October 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/110063** |

| Patent document cited in search report | | | Publication date (day/month/year) | Patent family member(s) | | | Publication date (day/month/year) |
| --- | --- | --- | --- | --- | --- | --- | --- |
| CN | 108809598 | A | 13 November 2018 | US | 2020076647 | A1 | 05 March 2020 |
| | | | | BR | 112019023206 | A2 | 19 May 2020 |
| | | | | PL | 3621235 | T3 | 31 January 2022 |
| | | | | EP | 3621235 | A1 | 11 March 2020 |
| | | | | JP | 2020519185 | A | 25 June 2020 |
| | | | | US | 2022116246 | A1 | 14 April 2022 |
| | | | | CN | 110679109 | A | 10 January 2020 |
| | | | | CA | 3062381 | A1 | 26 November 2019 |
| | | | | WO | 2018202128 | A1 | 08 November 2018 |
| | | | | IN | 201947046848 | A | 29 November 2019 |
| | | | | VN | 68907 | A | 25 February 2020 |
| | | | | EP | 3917057 | A1 | 01 December 2021 |
| CN | 110024322 | A | 16 July 2019 | JP | 2019537856 | A | 26 December 2019 |
| | | | | KR | 20190071685 | A | 24 June 2019 |
| | | | | EP | 3520304 | A1 | 07 August 2019 |
| | | | | US | 2020008228 | A1 | 02 January 2020 |
| | | | | WO | 2018064313 | A1 | 05 April 2018 |
| | | | | JP | 2021073775 | A | 13 May 2021 |
| | | | | RU | 2019108999 | A | 28 September 2020 |
| | | | | KR | 20210134429 | A | 09 November 2021 |
| | | | | HK | 40005509 | A0 | 08 May 2020 |
| CN | 112654089 | A | 13 April 2021 | CA | 3049495 | A1 | 12 July 2018 |
| | | | | WO | 2018126763 | A1 | 12 July 2018 |
| | | | | CN | 108282877 | A | 13 July 2018 |
| | | | | CN | 108737058 | A | 02 November 2018 |
| | | | | EP | 3407523 | A1 | 28 November 2018 |
| | | | | US | 2018367277 | A1 | 20 December 2018 |
| | | | | IN | 201937028400 | A | 23 August 2019 |
| | | | | KR | 20190101454 | A | 30 August 2019 |
| | | | | ID | 201907493 | A | 18 October 2019 |
| | | | | VN | 67316 | A | 25 December 2019 |
| | | | | JP | 2020504554 | W | 06 February 2020 |
| | | | | BR | 112019014145 | A2 | 11 February 2020 |
| | | | | US | 2020204321 | A1 | 25 June 2020 |
| | | | | EP | 3852299 | A1 | 21 July 2021 |
| CN | 111357233 | A | 30 June 2020 | EP | 3698507 | A1 | 26 August 2020 |
| | | | | US | 2020280412 | A1 | 03 September 2020 |
| | | | | WO | 2019098555 | A1 | 23 May 2019 |
| | | | | KR | 20200075898 | A | 26 June 2020 |
| | | | | GB | 2568672 | A | 29 May 2019 |
| | | | | IN | 202047021212 | A | 19 June 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110897620X